# EUROPEAN PATENT APPLICATION

(11) **EP 3 734 938 A2**
(43) Date of publication of application: **04.11.2020**
(21) Application number: 20172748.4
(22) Date of filing: 04.05.2020
(51) Int. Cl.: H04L 29/08, A01G 25/16, G06F 8/65, H04W 4/70

(54) **WIRELESS POWER SELF HARVESTING CONTROL DEVICE AND SYSTEM AND METHOD FOR WIRELESSLY REPROGRAMMING THE SAME**

(30) Priority: 02.05.2019 US 201916402140
(71) Applicant: Waterbit, Inc., San Jose, CA 95138 (US)
(72) Inventor: NEMECEK, Craig, Seattle, WA 98136 (US); BROAD, Alan Steven, Palo Alto, CA 94303 (US); COATES, Robert William, Elk Grove, CA 95757 (US); TAYLOR, David Ray, San Jose, CA 95129 (US); GARCIA JIMENEZ, Luis Hector, Salinas, CA 93905 (US)
(74) Representative: Dilg, Haeusler, Schindelmann Patentanwaltsgesellschaft mbH

(57) **Abstract**

Embodiments of the present invention provide wireless control devices that operate in-field wirelessly without removable batteries, have power self-harvesting components, and can be wirelessly programmed over long ranges without interfering with the normal operation of the control devices. Only control devices that have sufficient power available to perform a reprogram cycle (and can function normally until a next power harvest cycle) are selected. Control devices can be selected for wireless reprogramming based on the upcoming functions to be performed by the control device, the amount of energy stored in the control device, the rate of power generation of a solar panel of the control device, and current and upcoming weather conditions, etc. The wireless programming can include updating a firmware of the control device, a bootloader of the control device, and an application program image. A bootloader image can be downloaded to update the bootloader, and the bootloader is executed to download one or more images for updating the firmware of a communication sub-system of the control device and/or an application program image to update a management sub-system of the control device.

## Description

### FIELD:

Embodiments of the present invention generally relate to the field of control and communication devices. More specifically, embodiments of the present invention relate to remote communication and programming of control and communication devices useful for controlling and monitoring agricultural systems.

### BACKGROUND:

Various electronic technologies have the potential to offer numerous benefits (e.g., increased productivity, reduced costs, etc.) in the field of remote control and monitoring. However, diverse applications and activities can give rise to or involve constraints and difficulties, e.g., remote environmental conditions, that can make utilization of the electronic technologies impractical or impossible. There are often practical or implementation details and considerations associated with the nature, characteristics, and features of the applications and activities that limit or prohibit implementation and actual utilization of many traditional electronic technologies.

The difficulties associated with actual implementation can be based on various factors (e.g., technological, logistical, economical, etc.). In a number of applications and activities, the external environment can make utilization of an electronic device difficult or impractical. For example, a number of environmental conditions and activities can impact utilization of an external power supply. In some instances the location of a device (e.g., remote, inaccessible, under water, on a mobile platform, etc.) limits the availability of external power sources. For example, if a location is very remote there may be no convenient connection to an external power supply (e.g., a utility source, etc.). Activities in an environment can also make external power supply impractical or impossible. Movement of other objects or entities (e.g., equipment, vehicles, animals, humans, etc.) in the environment can adversely impact external power supply delivery. The motion can interfere with or destroy external power supply infrastructure (e.g., wires, towers, poles, etc.). For example, in an agricultural application, workers and farm equipment (e.g., plowing machinery, harvesting equipment, etc.) can interfere with (e.g., break, pull up, cut, get entangled, etc.) external power supply equipment/infrastructure (e.g., wires, mounting supports, poles, etc.).

Farming operations often experience many of the difficulties described above due to the large areas that must be maintained and the complex environments in which they operate. Large-scale farming is a critical aspect of modern economies and requires complex and sophisticated systems and devices for controlling important agricultural functions such as irrigation and the monitoring of crops and equipment. For example, control boxes and devices are usually installed in a plot or field to monitor the status of crops growing in the field and soil conditions using one or more sensors and can be used to control connected farming equipment such as water valves and other irrigation related components. The efficiency and output of large-scale farming is substantially enhanced by these systems and devices and therefore the maintenance and reliability thereof are paramount for a successful large-scale farming operation.

Current approaches to control and communication devices for use in farming operations require the use of equipment that is often not well-suited for deployment on a farm or vineyard, where the equipment often must be installed on the same plot of land where crops are being cared for, grown, and harvested. For example, using solar power to power irrigation control and monitoring devices typically relies on solar panels elevated by tall booms that reach several feet into the air to position the solar panels above the canopy of surrounding crops. However, such a tall structure often interferes with farming equipment that is used to maintain or harvest the crops, such as tractors and harvesters. Moreover, the tall booms and heavy solar panels are prone to damage by environmental factors, such as heavy rains and winds, and replacing these devices is often expensive and time consuming. The cost of failure of these control and communication devices is amplified by the fact that crops may be damaged, for example, due to lack of water, while the control device is offline.

As an alternative to solar powered devices, control devices with wired power supplies deployed for controlling farming and irrigation equipment (e.g., valves, sensors, etc.) require running lengthy power lines that may interfere with crops and may be difficult to replace in the case of failure. Control and communication devices that rely on electro-chemical batteries for power must be serviced frequently to replace the batteries, and the device must be opened to access the batteries. Devices that are opened and closed for servicing typically lack water and moisture-tightness leading to unreliable devices with relatively short lifespans.

A related problem currently facing large-scale farming operations is how to update the firmware used to operate remote in-field installed wireless communication and control devices. Wireless communication and control devices typically operate with a tightly constrained power budget, and providing over-the-air updates to the devices often requires a large amount of energy to download and install the requisite data and this update cycle may interfere with the normal operations performed by the devices and/or consume the energy stored by the devices. Therefore, an approach to updating wireless communication and control devices over-the-air is needed that considers the limited energy available to these devices without interfering with the normal operation of farming and irrigation equipment is needed. Moreover, what is needed is system for wirelessly updating firmware and other programming used by in-field installed remote devices that communicate wirelessly.

### SUMMARY:

Embodiments of the present invention provide a remote server in communication with an in-field gateway device which is in communication with a plurality of in-field wireless control devices that communicate wirelessly and operate without removable batteries and can be wirelessly programmed over long ranges by the server without interfering with the normal operation of the control devices or without consuming energy otherwise required of and needed by the control devices. The control devices are installed in-field and operate remotely and independently to control various aspects of the field and measure various conditions of the field based on firmware and other programming. The control devices have power self-harvesting components and can thereby recharge an internal energy store. Therefore, no removable batteries are used and no external power sources or power components are required of the control devices. In advance of reprogramming a control device, the server first checks information relayed by the control device (and other information known by the server of the control device) to determine if the control device is suitable for reprogramming. In summary, the control device requires adequate energy to: 1) engage in a reprogramming cycle; and 2) continue to perform its usual functions until a next power harvest interval.

More specifically, a control device or group of control devices can be determined to be suitable for reprogramming based on the upcoming functions to be performed by the control device, the amount of energy stored in the control device, the rate of power generation of a solar panel of the control device, and current and upcoming weather conditions, etc. The wireless programming can include updating a bootloader of the control device, firmware of the control device, and/or an application program executed by a processor of the control device and/or a control program of a communication sub-system of the control device. According to some embodiments, a bootloader image is downloaded to update the bootloader version, and the bootloader is executed by a management sub-system to download one or more images for updating the firmware of a communication sub-system of the control device and/or an application program image to update the management sub-system. Wireless reprogramming in accordance with the above is only performed on control devices that have been determined to be suitable for the update.

According to one embodiment, a method of programming remote electronic devices is disclosed. The method includes a server system checking reported levels of energy stores of a plurality of control devices, and the server system determining expected future workloads of the plurality of control devices. Based on the reported levels of energy stores and the expected future workloads, the server system determining a subset of the plurality of control devices that are suitable for a programming cycle, the server system transmitting ready signals to the subset of control devices via a wireless network to prepare the subset of control devices for the programming cycle, where control devices of the subset remain in power up state awaiting programming subsequent to receiving the ready signals, and the server system performing the programming cycle by transmitting programming information over the wireless network to the subset of control devices for programming thereof until all control devices of the subset of control devices report successful programming thereof, and where the plurality of control devices include remotely installed in-field electronic devices that include respective components and electronics to perform power self harvesting, where no external power source or supply is required for performance of operations of the plurality of control devices.

According to some embodiments, each control device of the plurality of control devices periodically reports update information to the server system over the wireless network during a respective update period and also listens for communication from the server system during the respective update period. The update information includes an indication of a level of energy stored for a respective control device, an identification code of the respective control device, and an indication of sensor data and valve state data associated with the respective control device.

According to some embodiments, each control device of the subset of control devices also receives the ready to program signal during the respective update cycle.

According to some embodiments, the reported levels of energy stores of the plurality of control devices include reported voltage levels of supercapacitors of the plurality of control devices.

According to some embodiments, the expected future workloads of the plurality of control devices include, for each control device, scheduled valve control operations and scheduled sensor reading operations expected to be performed by each control device before a next expected power recharge event for power self harvesting operations of each control device.

According to some embodiments, the method further includes, during the programming cycle, each control device of the subset of control devices performing programming of a plurality of integrated circuit devices associated therewith based on downloaded programming information from the server system.

According to some embodiments, the plurality of integrated circuit devices, for each control device, include: a PSoC controller; and a wireless communication radio device coupled to the PSoC controller.

According to some embodiments, the performing programming of the plurality of integrated circuit devices for a respective control device includes programming a wireless communication radio device of the respective control device by downloading a bootloader image into a PSoC controller associated with the respective control device, executing the bootloader in the PSoC controller, using the bootloader to download a first image into non-volatile memory of the PSoC controller, programming a wireless communication radio device of the respective control device using the PSoC controller and the first image, using the bootloader to download a PSoC application to the non-volatile memory of the PSoC controller, and executing the PSoC application on the PSoC controller.

According to some embodiments, the first image and the PSoC application are downloaded from the server system to the respective control device in a plurality of discrete chucks and where each chuck is verified by a checksum.

According to some embodiments, the performing programming of the plurality of integrated circuit devices for a respective control device includes programming a PSoC controller of the respective control device by downloading a bootloader image into the PSoC controller, executing the bootloader in the PSoC controller, using the bootloader to download a PSoC application into memory of the PSoC controller, and executing the PSoC application.

According to some embodiments, the PSoC application is downloaded from the server system to the respective control device in a plurality of discrete chucks where each chuck is verified by checksum.

According to some embodiments, the wireless network is a wireless network based on the LoRa wireless communication standard.

According to some embodiments, the server system determining a subset of the control devices that are suitable for a programming cycle includes the server system utilizing the expected future workloads to compute power consumption levels for the plurality of control devices, the server system subtracts the power consumption levels from the levels of energy stores to obtain residual energy levels for the plurality of control devices, and the server system examines the residual energy levels of the plurality of control devices to determine which control devices have sufficient residual energy levels to allow for programming thereof and including only those control devices into the subset.

According to some embodiments, each control device of the plurality of control devices include an enclosure defining an interior space and including a first opening; a second opening and a third opening, where the enclosure is sealed to restrict water entry to the interior space, an energy harvesting device sealed with respect to the first opening to restrict water entry to the interior space, the energy harvesting device operable to generate and provide power, a plurality of super capacitors disposed within the interior space and operable to receive and store energy generated from the energy harvesting device, control electronics disposed within the interior space and including a processor and re-programmable memory, the control electronics coupled to receive power from the plurality of super capacitors and operable for capturing sensor data, operable for generating valve control information and further operable to communicate with a remote control station, a wireless communication device disposed within the interior space and coupled to the control electronics and operable to provide wireless communication for the control electronics, and input/output circuitry operable for generating signals responsive to the control electronics to control exterior valves and further operable for receiving sensor data from exterior sensors, where the input/output circuitry is disposed within the interior space and coupled to ports disposed at the second and third openings.

According to another embodiment, a wirelessly reprogrammable irrigation control system is disclosed, the irrigation control system including a server configured to determine levels of energy stores and expected future workloads of a plurality of control devices, a local gateway configured to facilitate communication between the server and the plurality of control devices, and the plurality of control devices, wherein based on the levels of energy stores and the expected future workloads, the server determines a subset of the plurality of control devices that are suitable for a programming cycle, where the server transmits ready signals to the subset of control devices via the local gateway to prepare the subset of control devices for the programming cycle, and where further the server performs the programming cycle by transmitting programming information to the subset of control devices via the local gateway for programming thereof until all control devices of the subset of control devices report successful programming thereof.

According to some embodiments the server determines a subset of the plurality of control devices that are suitable for a programming cycle based on rejection criteria associated with the plurality of control devices, and the rejection criteria for a respective control device comprises at least one of: a current time of day, a soil type associated with the respective control device, historical power generation information associated with the respective control device, and expected weather conditions.

According to some embodiments the server includes a cloud computing device, and the local gateway executes a Linux operating system and can perform functionality of the server in case the server is unavailable.

According to a different embodiment, a method of wirelessly reprogramming a control device is disclosed. The method includes using a server to broadcast data indicating that an update is available for the control device, using the server, determining that the control device is in condition to download and install the update according to a stored energy level of the control device and rejection criteria associated with the control device, using the server, wirelessly transmitting a first update image of the update to a the control device, updating a bootloader of the control device using the first update image, using the control device to execute the bootloader, downloading a second update image to the control device, and using the bootloader executed by the control device to update a sub-system of the control device with the second update image.

According to some embodiments, the sub-system includes a PSoC management sub-system and the second update image includes an application program image for programming the PSoC management sub-system.

According to some embodiments the sub-system includes an xDoT communication sub-system and the second update image includes a firmware image for programming the xDoT communication sub-system.

According to some embodiments the method further includes downloading a third update image to the bootloader and using the bootloader executed by the control device to update a PSoC management sub-system of the control device.

According to some embodiments the control device remains in a power up state awaiting programming subsequent to the determining that the control device is in condition to download and install the update according to a stored energy level of the control device and rejection criteria associated with the control device.

According to some embodiments the rejection criteria includes at least one of: a time of day, an expected future workload of the control device, a soil type, historical power generation information, and a weather condition.

According to another embodiment, a method of wirelessly updating firmware of a control device is disclosed. The method includes determining if the control device is suitable to participate in an update cycle and therefore has sufficient energy to participate, provided the control device is suitable to participate in the update cycle, transmitting a ready signal to the control device via a wireless network, responsive to the ready signal, the control device remaining in a wake state, transmitting a new program wirelessly to the control device using the wireless network, and the control device updating internal memory with the new program and executing the new program, where the control device is a remotely installed self-contained electronic device operating at low power.

According to some embodiments, determining if the control device is suitable to participate in an update cycle includes checking previously reported and stored data from the control device indicating an energy store of the control device and a schedule of work that the control device is expected to perform.

According to some embodiments, determining if the control device is suitable to participate in an update cycle further includes checking at least one of: measured and reported soil conditions of the control device; known soil types of the control device; weather conditions; and a charging rate of an energy harvesting component associated with the control device.

According to some embodiments, the control device includes a wireless communication system at a first power domain, a processor system including a memory at the first power domain, an input/output system at a second power domain and for controlling external actuators and for reading data from external sensors, where the first power domain is a low power domain, and a power harvesting component coupled to store harvested power to an energy store where the energy store supplies energy for the first and second power domains.

According to some embodiments, the power harvesting component is a solar panel, where the energy store is a super capacitor, where the external actuators are configured to turn on/off irrigation valves and where the first power domain is substantially at 0.7 - 3.0 volts.

According to some embodiments, the wireless network is compatible with the LoRa wireless network standard.

According to some embodiments, the method includes using a remote server system and the control device includes a processor system including a processor and memory, and a communication system. The transmitting, updating and executing includes the server system wirelessly transmitting a bootloader to the memory of the control device, the control device using the bootloader to download an application program from the server for storage into the memory of the control device, and the processor of the control device executing the application program from the memory.

According to some embodiments, the method uses a remote server system and the control device includes a processor system including a processor and memory, and a communication system, and the transmitting, updating and executing includes the server system wirelessly transmitting a bootloader to the memory of the control device, the control device using the bootloader to download a program image from the server for storage into the memory of the control device, the bootloader copying the program image from the memory to the communication system, the communication system executing a program of the program image, the control device using the bootloader to download an application program from the server for storage into the memory of the control device, and the processor of the control device executing the application program from the memory.

### BRIEF DESCRIPTION OF THE DRAWINGS:

The accompanying drawings, which are incorporated in and form a part of this specification, illustrate embodiments of the invention and, together with the description, serve to explain the principles of the invention:
Figure 1A is a perspective view diagram of an exemplary in-field installed wirelessly reprogrammable control device in accordance with one embodiment illustrating a power self harvest component and communication ports.
Figure 1B is a block diagram of an enclosure main body portion of an exemplary in-field wirelessly reprogrammable control device in accordance with one embodiment.
Figure 1C is a block diagram of an interior of an exemplary in-field installed wirelessly reprogrammable control device in accordance with one embodiment.
Figure 1D is a block diagram of circuit sub-systems of an exemplary wirelessly reprogrammable control device designed for remote field installation in accordance with one embodiment.
Figure 2 is a block diagram of an exemplary system including a wirelessly reprogrammable control device and communication networks in accordance with one embodiment for wirelessly reprogramming a control device.
Figure 3 is a block diagram of an installation environment of an in-field installed wirelessly reprogrammable control device designed for remote field installation used in an exemplary irrigation implementation in accordance with one embodiment.
Figure 4 is a block diagram of an exemplary multiple wirelessly reprogrammable control device implementation system in accordance with one embodiment and illustrates the remote server, the gateway communication device and a plurality of control devices.
Figure 5 is an electronics block diagram of an exemplary wirelessly reprogrammable control device designed for remote field installation in accordance with one embodiment.
Figure 6A is a flow chart depicting an exemplary sequence of computer-implemented steps for automatically transmitting and installing an update for a control node or group of control nodes from a server system according to embodiments of the present invention.
Figure 6B is a flow chart depicting an exemplary sequence of computer-implemented steps for automatically downloading and installing an update for a control node or group of control nodes according to embodiments of the present invention.
Figure 7 is a flow chart depicting an exemplary sequence of computer-implemented steps for automatically downloading and installing a bootloader image, a management sub-system image, and/or a communication sub-system image for updating a control node according to embodiments of the present invention.
Figure 8 is a flow chart depicting an exemplary sequence of computer-implemented steps for automatically determining rejection criteria to update a group of control nodes depicted according to embodiments of the present invention.
Figure 9 is a block diagram of an exemplary PSoC in accordance with one embodiment of the present invention.
Figure 10 is a block diagram depicting an exemplary sequence of download steps for downloading an update image to a device (e.g., a control node) according to embodiments of the present invention.
Figure 11 is an exemplary block diagram and data flow diagram for updating a bootloader of a PSoC depicted according to embodiments of the present invention.
Figure 12 is an exemplary block diagram and data flow diagram for updating an xDoT radio using a bootloader of a PSoC depicted according to embodiments of the present invention.
Figure 13 is an exemplary block diagram and data flow diagram for updating an application program executed by a PSoC using a bootloader of the PSoC depicted according to embodiments of the present invention.
Figure 14 is a block diagram of an exemplary PSoC of a device (e.g., a control node) in wireless communication with a local gateway where the device sends periodic status updates to the gateway and receives information and update data from the gateway depicted according to embodiments of the present invention.
Figure 15A is a diagram of an exemplary wireless control and communication system for managing and operating a plurality of nodes depicted according to embodiments of the present invention.
Figure 15B is a diagram of an exemplary sleep schedule for a node (e.g., a control device) based on a duty cycle or wake time depicted according to embodiments of the present invention.
Figure 16 is an exemplary chart of soil compositions of a field where control devices, sensors, and irrigation equipment are installed depicted according to embodiments of the present invention.

### DETAILED DESCRIPTION:

Reference will now be made in detail to several embodiments. While the subject matter will be described in conjunction with the alternative embodiments, it will be understood that they are not intended to limit the claimed subject matter to these embodiments. On the contrary, the claimed subject matter is intended to cover alternative, modifications, and equivalents, which may be included within the spirit and scope of the claimed subject matter as defined by the appended claims.

Furthermore, in the following detailed description, numerous specific details are set forth in order to provide a thorough understanding of the claimed subject matter. However, it will be recognized by one skilled in the art that embodiments may be practiced without these specific details or with equivalents thereof. In other instances, well-known methods, procedures, components, and circuits have not been described in detail as not to unnecessarily obscure aspects and features of the subject matter.

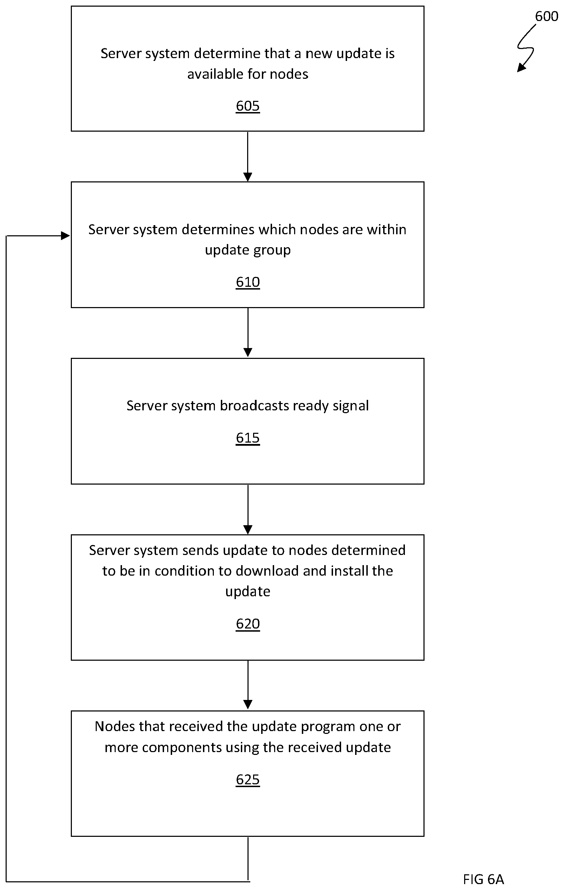

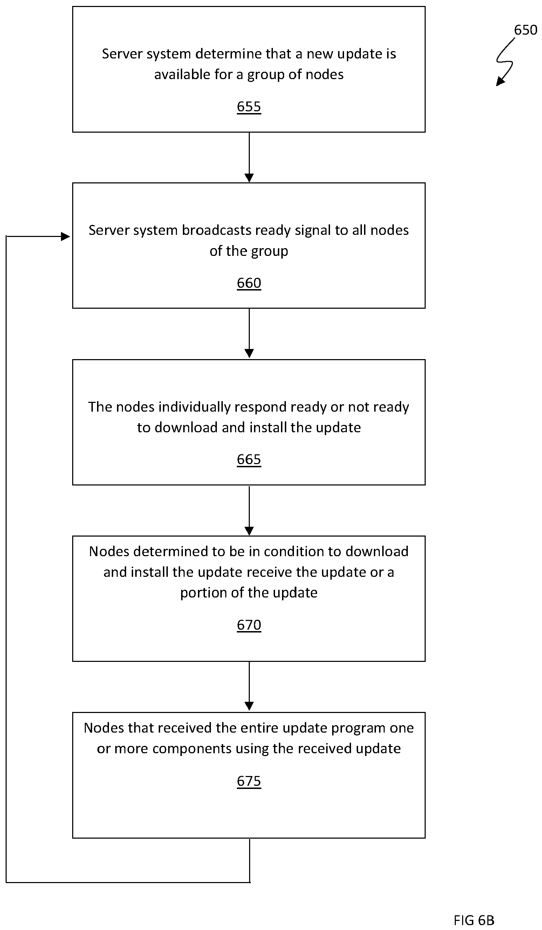

Portions of the detailed description that follows are presented and discussed in terms of a method. Although steps and sequencing thereof are disclosed in a figure herein (e.g., Figures 6-8) describing the operations of this method, such steps and sequencing are exemplary. Embodiments are well suited to performing various other steps or variations of the steps recited in the flowchart of the figure herein, and in a sequence other than that depicted and described herein.

Some portions of the detailed description are presented in terms of procedures, steps, logic blocks, processing, and other symbolic representations of operations on data bits that can be performed on computer memory. These descriptions and representations are the means used by those skilled in the data processing arts to most effectively convey the substance of their work to others skilled in the art. A procedure, computer-executed step, logic block, process, etc., is here, and generally, conceived to be a self-consistent sequence of steps or instructions leading to a desired result. The steps are those requiring physical manipulations of physical quantities. Usually, though not necessarily, these quantities take the form of electrical or magnetic signals capable of being stored, transferred, combined, compared, and otherwise manipulated in a computer system. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussions, it is appreciated that throughout, discussions utilizing terms such as "accessing," "writing," "including," "storing," "transmitting," "associating," "identifying," "encoding," or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Embodiments of the present invention provide systems and methods used in association with irrigation applications and activities as an example of the design and construction of the remote controller device. It is appreciated that such use in irrigation, e.g., for valve control and water sensing, is but one exemplary use of the device. The device, or control device, or control box or control and sensing device, or remotely installed device, or power self harvesting control device designed for remote field installation is generally described as follows. It is a relatively small device, e.g., 100mm by 100mm by 70mm in one embodiment, designed for remote in-field installation, e.g., an orchard or other agricultural environment.

The in-field installed device wirelessly communicates to an in-field installed base station which communicates back to a cloud based remote server. Multiple devices can communicate with the same base station. The device is designed such that its internal electronic components are water protected and its internal components are further sealed from the outside environment. The device is fabricated such that it wears over time well against external environmental conditions expected of the in-field installation. The device is capable of self harvesting power and storing that power for its functionalities, e.g., sensing, control, processing and communication, etc. The device has ports for controlling external components (e.g., valves) and for receiving inputs from external components, e.g., water and other sensors. The programing and logic of the device are reprogrammable wirelessly and contains communication circuitry, memory, and a processor as well as power storage components, e.g., capacitors. From top to bottom, the device is designed to be placed in-field over long durations without any substantial manual service requirements. The device is designed to be located and sized such that it does not interfere with expected machinery of the in-field installation.

More specifically, as an irrigation control and sensing device, the device can include power self harvesting, power regulation, soil moisture monitoring, wireless communication and water supply control. The device enclosure (e.g., size, material, sealants, potting, etc.) enables the device to be mounted in a convenient location that does not interfere with other external agricultural activities (e.g., harvesting, fertilizing, trimming, plowing, planting, etc.) while protecting against environmental hazards associated with the location and activities (e.g., moisture, chemicals, physical impacts, etc.).

The self harvesting power features enable the device to operate in the irrigation application and activity environment while avoiding detrimental impacts associated with external power supply components (e.g., digging up, cutting, tangling up with other equipment, etc.) in similar irrigation environments. The robust/hardened features, the information processing capabilities, and the remote communication features of the device can also facilitate simplified and improved maintenance. In one embodiment, the enclosure and components are configured to divide maintenance and trouble shooting activities into simplified tasks (e.g., wiping solar panel with cloth, observing and reporting exterior physical damage, etc. during mission mode) to be performed by non-skilled users and less frequently performed and more complicated tasks by specialists/technicians (e.g., remote reconfiguration, etc.).

As described in more detail below, the in-field installed remotely located control devices can be wirelessly reprogrammed based on control and data from a cloud based server system. In one embodiment, the bootloader used by the control device, the application program executed by the processor of the control device and the programming of the communication sub-system of the control device can all be updated over a wireless communication network. By allowing wireless reprogramming in this fashion, need for manual servicing of the control device is substantially reduced. Since the control devices operate at very low power, and perform power self-harvesting to recharge an internal energy store, the server first determines whether or not a particular control device is suitable for reprogramming before commencing any reprogramming cycles on the control device.

Determining suitability for reprogramming involves checking the control device to make sure that the device has adequate energy to: 1) perform the reprogramming; and 2) thereafter continue with its normal functions until a next power harvesting cycle, e.g., next expected sunlight for control devices having solar panel components. In order to determine the above, the server needs to check the current energy store of the device, its typical recharging rate, and the energy required of the device to perform the device's upcoming operations. In order to determine the last item above, the server needs to know the device's schedule of operations and this may require both knowledge of the installation environment of the device, the device's programming and potentially current and expected weather conditions. Once selected for update, the in-field control device can receive new programming for its processor and communication sub-system via a wireless network.

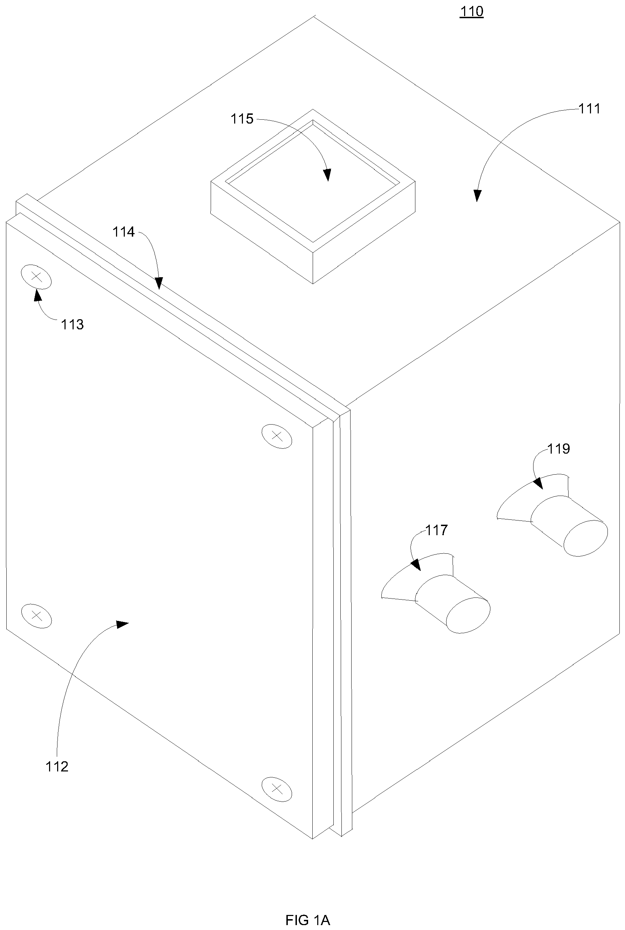

Figure 1A is a block diagram of an exemplary power self harvesting control device 110 capable of wireless reprogramming in accordance with one embodiment. The power self harvesting control device 110 enclosure includes a main body portion 111 and a cover 112. When operational in the field the cover 112 and main body 111 are coupled together. In one embodiment, the power self harvesting control device 110 has a mating component 114 (e.g., lip, channel, groove, etc.) to assist the coupling of the cover 112 with the main body 111. It is appreciated there are a variety of configurations that facilitate coupling of the main body portion 111 and a cover 112. Power self harvesting control device 110 can include coupling components 113 (e.g., screws, rivets, etc.) for securing the cover 112 and the main body 111 tightly together. In one exemplary implementation, the mating component 114 can be secured with a glue/bonding type material for permanently coupling the main body 111 and cover 112. The mating component 114 can include material with sealant characteristics that protect against elements that can adversely effect the power self harvesting control device 110 (e.g., corrosive elements, moisture, dirt, atmospheric pressure, etc.).

It is appreciated power self harvesting control device 110 enclosure components can include rugged/hardened characteristics and features that facilitate survivability and long life in harsh environments. The configuration of the power self harvesting control device 110 enclosure, including material used to form the enclosure, can offer various protections to facilitate the accurate operation and longevity of the power self harvesting control device 110. The power self harvesting control device 110 enclosure can protect the interior components from various threats. The power self harvesting control device 110 enclosure can protect against adverse impacts associated with physical contact (e.g., from machinery, worker, animals, corrosive elements, etc.). In one embodiment, the power self harvesting control device 110 enclosure can protect against adverse corrosive elements (e.g., moisture, water, gases, etc.). The enclosure can include a UV resistant material. The enclosure can include a shock resistant material. The enclosure can include radio frequency (RF) transparent material.

Power self harvesting control device 110 can also include various components coupled to exterior portions of the enclosure. In one embodiment, a power self harvesting component 115 (e.g., a solar cell component, an air/fluid flow component, etc.) is coupled to the exterior of power self harvesting control device 110. Power self harvesting control device 110 can have connector/interface components (e.g., 117, 118, etc.) coupled to exterior portions of the enclosure.

Power self harvesting control device 110 can include access features (e.g., openings, holes, etc.) to allow components coupled to the exterior of power self harvesting control device 110 access to the interior power self harvesting control device 110. In one embodiment, various components (e.g., wires, leads, etc.) that are coupled to interior components and exterior components penetrate the access features. In one embodiment, a component coupled to the exterior covers an access feature. In one exemplary implementation, the component covering the access feature is secured to the enclosure in a configuration that restricts penetration or entry by foreign materials through the access feature by unwanted/harmful elements (e.g., moisture, liquids, gases, corrosive elements, fertilizer, small insects/organisms, dust, solids, dirt, pollen, etc.). In one embodiment, components coupled to the enclosure (e.g., energy harvesting device, connectors, etc.) can be sealed to the enclosure with a pressure sensitive adhesive (PSA). In one embodiment, components coupled to the control box enclosure can include a protective cover. In one exemplary implementation, a power self harvesting component includes a solar panel that includes a gorilla glass cover layer.

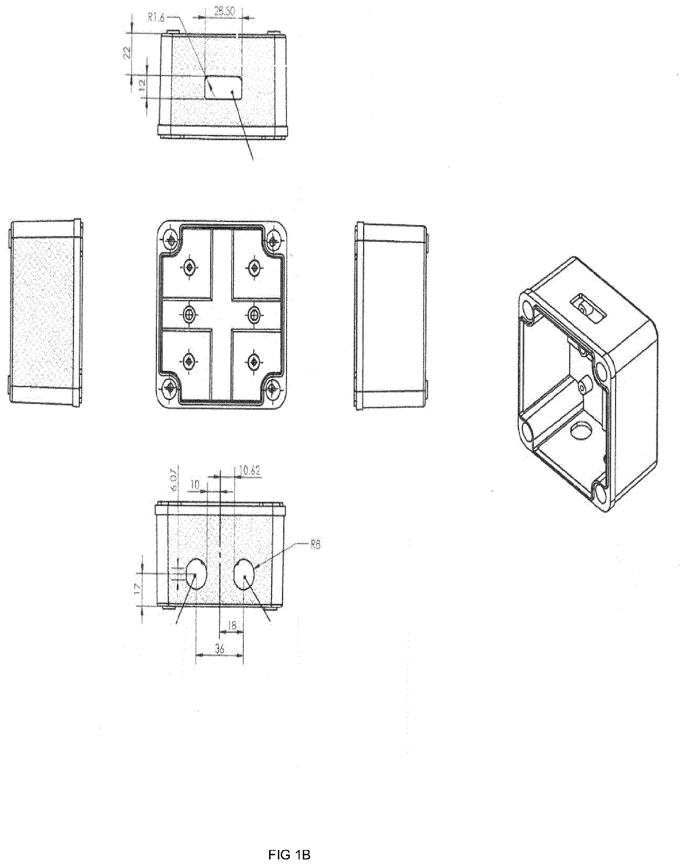

Figure 1B is a block diagram of an exemplary power self harvesting control device 110 enclosure main body portion. In one embodiment, the enclosure is configured based upon an application and to be compatible with a corresponding environment and is capable of wireless reprogramming. In one exemplary implementation, an enclosure utilized in an irrigation related application is configured to be sufficiently small enough to avoid impacts associated with other activities in the environment (e.g., harvesting, pruning/trimming, plowing, fertilizing, etc.). In one embodiment, the enclosure exterior dimensions are 100mm by 100mm by 70mm. In one embodiment, the enclosure in Figure 1B includes an access opening 5 that is operable to be covered by a solar cell device and openings 2 and 3 for that ar operable to be covered by connector. Wires coupled to the solar cell device and connectors have access to the interior of the enclosure through the respective openings (e.g., 5, 2, and 3).

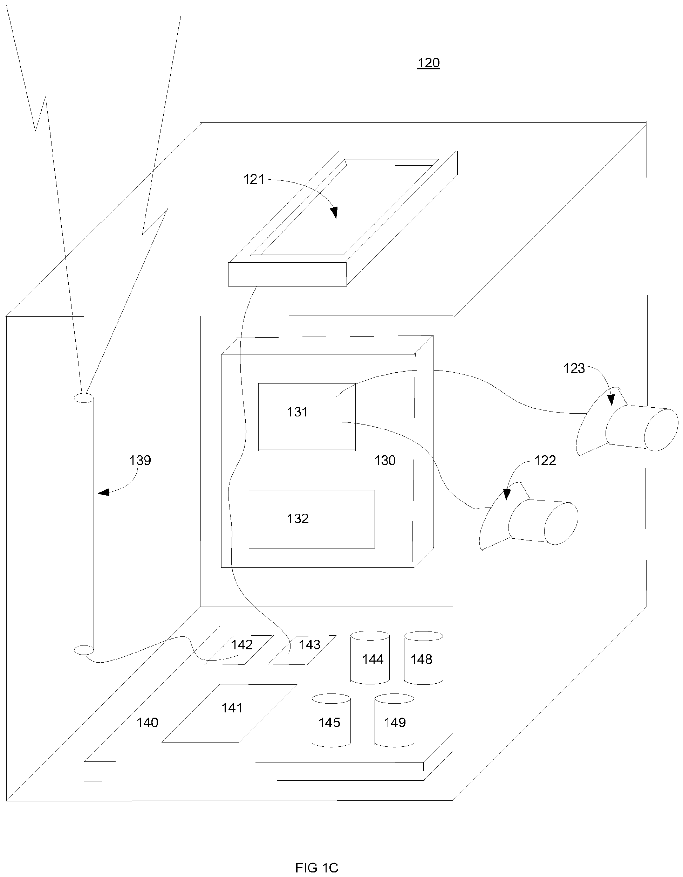

Figure 1C is a block diagram of an exemplary interior of a power self harvesting control device 120 capable of wireless reprogramming in accordance with one embodiment. In one exemplary implementation, the enclosure of power self harvesting control device 120 is similar to the enclosure of power self harvesting control device 110 described above. Power self harvesting control device 120 includes an energy self harvesting component 121 and connectors 122 and 123. Power self harvesting control device 120 also includes a first printed circuit board 130, a second printed circuit board 140, and a communication antenna 139. First printed circuit board 130 includes components (e.g., circuitry 131, 132, etc.) associated with exterior functions. The exterior functions can include sensing exterior environment conditions (e.g., soil moisture, sunlight, wind, temperature, etc.) and controlling/driving exterior component operations (e.g., opening a valve, closing a valve, etc.). Second printed circuit board 140 includes component 142 associated with communications, component 141 associated with command and control, component 143 associated with energy harvesting and components 144, 145, 18, 148 associated with energy storage.

It is appreciated that components included in power self harvesting control device 120 can operate in different voltage/power domains. In one embodiment, components included on first printed circuit board 130 are primarily operate at a first voltage level while command and control components included on second printed circuit board 140 operate at a second voltage level. In one exemplary implementation, the first voltage level is approximately 2.5 volts and the second voltage level is approximately 5.0 volts. In one embodiment, a portion of power sub-system components included on second printed circuit board 140 operate at the first voltage level and another portion of power sub-system components included on second printed circuit board 140 operate at the second voltage level.

In one embodiment, a power self harvesting control device includes interior protection components/features. In one exemplary implementation, a control box includes potting material disposed to cover the plurality of super capacitors, the control electronics, the wireless communication device and the input/output circuitry. The potting material can be operable to provide various types of protection. In one embodiment the pot material can prevent water from entering the interior space and from reaching the plurality of super capacitors, the control electronics, the wireless communication device and the input/output circuitry. The pot material can also help absorb shocks or forces associated with external exterior physical contacts.

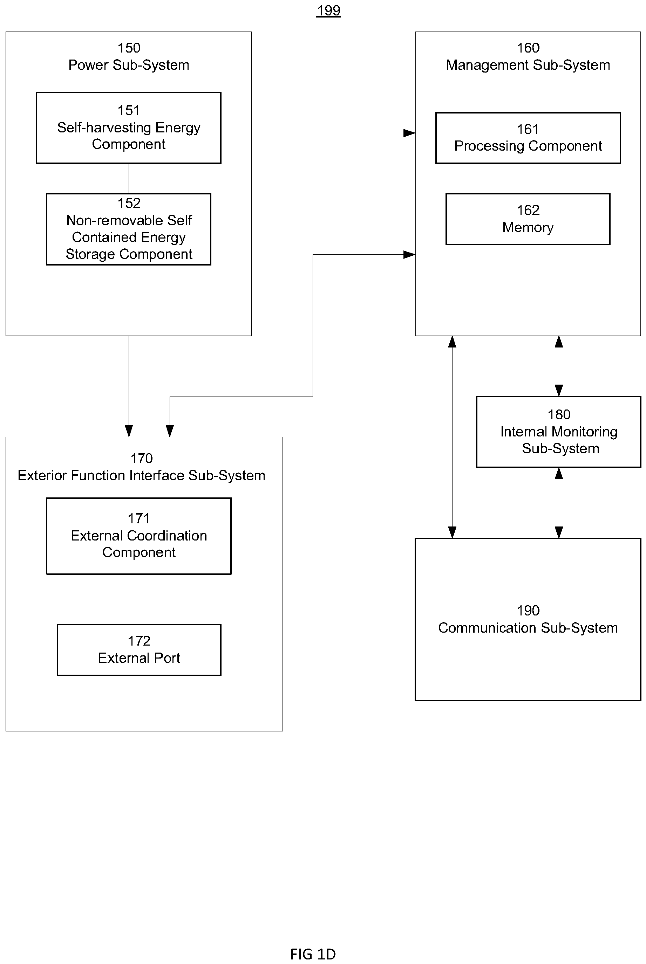

Figure 1D is a block diagram of an exemplary power self harvesting control device 199 capable of wireless reprogramming in accordance with one embodiment. Power self harvesting control device 199 includes a power sub-system 150, a management sub-system 160, an exterior function interface sub-system 170, an internal monitoring sub system 180, and a communication sub-system 190. Power sub-system 150 is configured to self-harvest energy while avoiding reliance on external energy supplied from other devices and power sources. In one embodiment, the power sub-subsystem includes a self contained energy storage component that stores self-harvested energy. In one exemplary implementation, the self contained energy storage component is non-removable. The communication sub-system 190 is configured to communicate with other devices wirelessly. Exterior function interface sub-system 170 is configured to handle input/output signals associated with the exterior component interactions, e.g., control devices, receive sensor data, etc. The management sub-system 160 is configured to manage and coordinate activities of the power control sub-system, the communication sub-system, and exterior function control sub-system. The management can include managing and coordinating supply and consumption of the self-harvested energy. In one embodiment, management sub-system 160 is reprogrammable and reconfigurable. It is appreciated the reprogramming can include various communication methods and mediums (e.g., wired, wireless, etc.).

It is appreciated the power self harvesting system 199 can be utilized in a variety applications and environments. The power self harvesting device 199 can be utilized in situations where implementation of external power supply is difficult or impractical. In one embodiment, the power sub-system 150 includes a self-harvesting energy component 151 and a non-removable self contained energy storage component 152. Self-harvesting energy component 151 generates or harvests energy locally. The locally generated energy is sufficient to operate the power self harvesting device 199 under normal conditions. In one embodiment, component 151 includes a solar panel. Non-removable self contained energy storage component 152 receives the energy generated/harvested by self-harvesting energy component 151 and stores the energy for utilization in the operation of the components of power sub-system 150. In one embodiment, component 152 is one or more capacitors. The power sub-system 150 supplies power to components of the power self harvesting device 199, including management sub-system 160, communication sub-system 190, and exterior function interface sub-system 170. The power sub-subsystem 150 can direct power supply from the non-removable self contained energy storage component to other components included in the power self harvesting device.

The harvesting and distribution of the generated and stored self harvested power and energy can be based upon the nature and characteristics of the applications and activities the power self harvesting device 199 is engaged in. In one embodiment, the control electronics operate at a low voltage level for power conservation (e.g., 2.2 volts in one implementation) and the input/output circuitry operates at a standard digital voltage (e.g., 5 volts in one implementation) compatible with remote electronics. The amount of energy/power that is required to be harvested and stored to perform can be based on a task. It is appreciated there can be different tasks and corresponding different amounts of energy/power that is harvested and stored. The task and amount of energy/power can differ within an application. The task and amount of energy/power can differ across different applications. An irrigation task within a particular agricultural application can involve different energy/power requirements than a fertilizing task within that particular agricultural application. An irrigation task associated with a particular corn growing agricultural application can involve can involve different energy/power requirements than an irrigation task associated with a particular walnut growing agricultural application. An irrigation task associated with a particular agricultural application can involve different energy/power requirements than an irrigation task associated with a particular application. An irrigation task associated with a particular agricultural application can involve different energy/power requirements than motion detection task associated with a particular security application.

In one embodiment, the power self harvesting device 199 can be in a partial or complete shut down and operations of the sub-systems can be initiated in response to a trigger event. The trigger event can be associated with the applications and activities the power self harvesting device 199 is engaged in. The trigger event can be a change in a sensed/monitored metric (e.g., level of moisture, movement, etc.). The change can be associated with a threshold or amount of difference. The threshold or amount of difference can be set based upon an application or activity/task. A detected moisture level in a first agricultural growing application (e.g., growing corn, growing walnuts, etc.) that triggers a power up and participation in a task can be different than a moisture level in second agricultural growing application (e.g., growing lettuce, growing apples, etc.) that triggers a power up and participation in a task.

It is appreciated the self-harvesting energy component 111 can include various components that are capable of harvesting energy (e.g., a solar cell component, wind/air flow turbine/propeller component, water flow component such as a propeller, water wheel, or so on, a pressure differential component, alpha particle battery, a radiation source, a temperature differential harvesting solution, a power coupling solution, kinetic energy recovery (KER) system, temperature differential solution, inductive power coupling, passive energy harvesting mechanism, active energy harvesting, etc.). The self-harvesting energy component 111 can include protective features/components. In one embodiment, a solar cell component includes a protective cover component that is a glass material (e.g., gorilla glass, etc.). The glass material is particularly well suited to last over time against damage from wind blown particles that are expected in certain in-field agricultural installations, e.g., sand, pollen, etc.

It is appreciated the non-removable self contained energy storage component 152 can include various components. The non-removable self contained energy storage component 152 can include a super capacitor. The non-removable self contained energy storage component can be re-charged with energy from the self-harvesting energy component. The energy storage component is capable of electronically reporting its energy reserve to the management sub-system 160.

In one embodiment, power self harvesting control device 199 can optionally receive externally generated power/energy under special conditions (e.g., testing, maintenance, etc.).

In one embodiment, the self harvested energy can be utilized by exterior components (e.g., exterior components not directly included in the power self harvesting device 199, etc.). Power sub-subsystem 150 can direct a supply of power from the non-removable self contained energy storage component 152 to other components exterior to the power self harvesting device. The exterior components can be communicatively coupled to the power self harvesting device 199 via exterior function interface sub-system 170. In one embodiment external coordination component 171 coordinates control and drives activities of external components. The control of the external components can be based upon directions received from management sub-system 160.

Management sub-system 160 can control other components of power self harvesting control device 199. Management sub-system 160 includes processing component 161 and memory 162. In one embodiment, the management sub-system 160 can include a programmable microprocessor component. The programmable microprocessor component can include a Field Programmable Gate Array (FPGA) component and a memory component. In one exemplary implementation, the management sub-system 160 can include a Programmable Microprocessor System on a Chip (PSoC) component.

In one embodiment, a power self harvesting control device (e.g., 110, 120, 199, etc.) is an internet of things (IoT) enabled device. In one embodiment, a power self harvesting control device (e.g., 110, 120, 199, etc.) is operable to communicate with the internet. In one exemplary implementation, a power self harvesting control device (e.g., 110, 120, 199, etc.) is operable to communicate with the cloud.

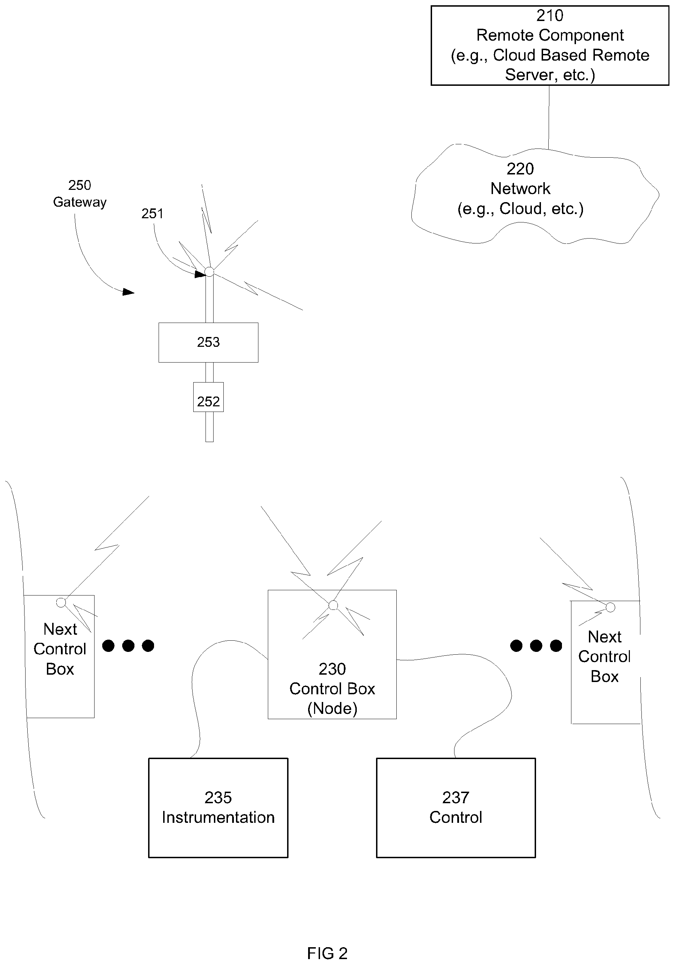

Figure 2 is a block diagram of an exemplary system including a power self harvesting control device capable of wireless reprogramming in accordance with one embodiment. The system includes a remote component 210, a network 220, control box 230, instrumentation component 235 and control component 237. In one embodiment, control box 230 is a power self harvesting device as described herein. In one exemplary implementation control box 230 is analogous to power self harvesting device 199. In one embodiment, instrumentation component 235 is a sensor for monitoring a condition or activity (e.g., moisture content, movement, etc.). Instrumentation component 235 can forward information to control box 230 either digitally or in analog format over a physical cable connected to the control box 230. In one embodiment, instrumentation component 235 can receive information from control box 230. Control component 237 is configured to engage in an external activity or task (e.g., turn a valve, move an object, etc.) under control from control box 230 connected thereto via physical cable in one embodiment. The control component 237 can perform the activity or task under the direction of control box 230. In one exemplary implementation, control component 237 performs the activity or task based upon information from instrumentation component 235. It is appreciated remote component 210 can include various types of components (e.g., cloud based remote server, user interface, central database, etc.). It is appreciated network 210 can include various components (e.g., the cloud, the internet, communications infrastructure, servers, databases, etc.). It is appreciated a power self harvesting device can be included in or part of the internet of things (IoT).

In one embodiment, control box 230 is a node communicatively coupled to network 220, e.g., via wireless communication. In one embodiment, control box 230 is a node communicatively coupled to network 220 via direct cellular communication between the control box 230 and network 220. In one embodiment, control box 230 is a node communicatively coupled to network 220 via gateway 250. In one exemplary implementation, gateway 250 includes an antenna 251, power supply 253 (e.g., power self harvesting component, battery, external power source, etc.) and communication controller 252. Remote component 210 can also be communicatively coupled to wireless network 220.

Gateway 250 facilitates communication between network cloud 220 and the control box 230. For example, the gateway 390 can receive update data from network cloud 220/cloud based remote server 210, and transmit the update data to the control box 230 to update firmware of the control box 230. Moreover, the control box 320 can send sensor and status information to the network cloud 220 via the gateway 250. The gateway 250 includes a communication device or antenna 251 for facilitating wireless communications over long distances, for example, using a 4G LTE cellular radio. The gateway 250 also include a power harvesting solar panel 253 for powering the gateway 250, and a computer system 252 for processing and storing date. According to some embodiments, the computer system 252 executes a Linux operating system.

Control box 230 and remote component 210 can communicate with each other via wireless network 220. Control box 230 can provide information (e.g., related to instrumentation information, control information, power consumption information, other information regarding the operations of control box 230, etc.) to remote component 210. Remote component 210 can provide information (e.g., directions related to instrumentation, control power consumption, control box programming/reconfiguration, other information regarding the operations of control box 230, etc.) to control box 230. The information from remote component 210 can be based upon results of processing the information received from the control box 230. In one embodiment, the remote interface 210 receives updates/changes to information associated with instrumentation and control from control box 230. The remote interface 210 can process the received information and provide updated directions to control box 230. It is appreciated that remote component 210 may additionally communicate with a cloud based server via another wireless network, e.g., a cellular network, for instance.

Gateway 250 facilitates communication between network cloud 220 and the control box 230. For example, the gateway 390 can receive update data from network cloud 220/cloud based remote server 210, and transmit the update data to the control box 230 to update firmware of the control box 230. Moreover, the control box 320 can send sensor and status information to the network cloud 220 via the gateway 250. The gateway 250 includes a communication device or antenna 251 for facilitating wireless communications over long distances, for example, using a 4G LTE cellular radio. The gateway 250 also include a power harvesting solar panel 253 for powering the gateway 250, and a computer system 252 for processing and storing date. According to some embodiments, the computer system 252 executes a Linux operating system.

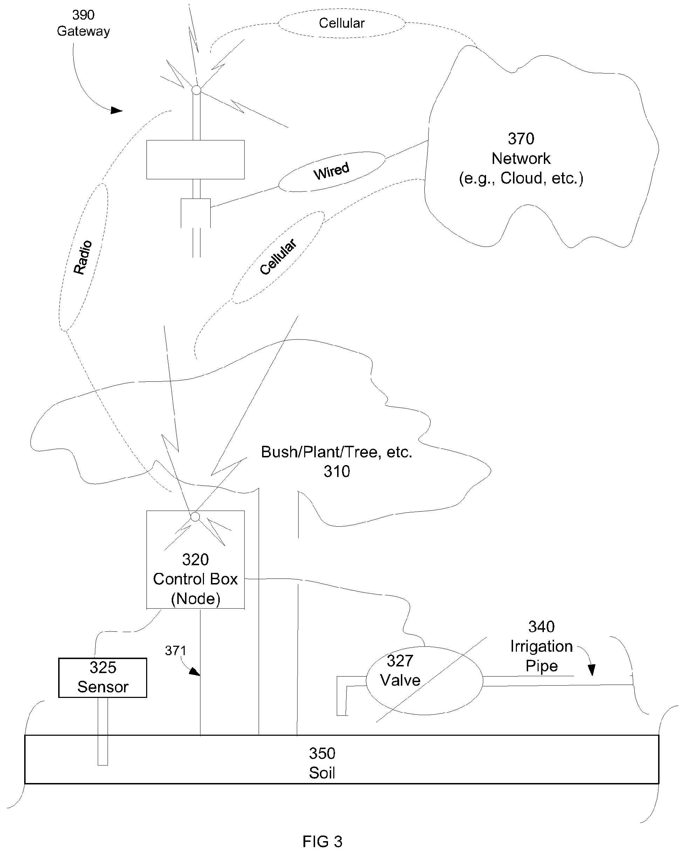

It is appreciated that a power self harvesting control device can be utilized in various applications and activities. In one embodiment, a power self harvesting control device can be utilized in irrigation applications and activities. Figure 3 is a block diagram of an exemplary irrigation implementation in accordance with one embodiment. Control box 320 is a power self harvesting control device located under some form of plantea (e.g., bush, plant, vegetation, tree, shrub, stalk, etc.) 310. In one embodiment, control box 320 is self mounted/supported by member 371 (e.g., pole, structure, irrigation pipe, etc,). The control box 320 is designed to communicate with wireless communication network 220 even if disposed low to the ground. In one embodiment, low to the ground is 1.5 feet or less above the ground. In one exemplary implementation, control box 320 is located low to the ground under portions of plantea (e.g., a bush, plant, tree, etc.) and can communicates with network cloud 370. The communication can be direct cellular communication or via gateway 390. Sensor 325 senses conditions of the soil 350 (e.g., moisture, nitrogen content, other hydration indicators, other fertilization indicators, etc.) and provides information regarding the sensed conditions (e.g., level of moisture, percentage of fertilizer, etc.). Control box 320 receives and processes the information from the sensor 325 via a cable in one embodiment. Based upon the results of the processing, control box 320 forwards directions (e.g., open, close, etc.) to valve 327 which controls water flow into the soil 350. In one embodiment, valve 327 implements the directions of control box 320 via a cable interface in one embodiment. The directions can include opening/closing the valve 327 to allow/prevent water flow from irrigation pipe 340. In one exemplary implementation, valve 327 utilizes a portion of its self harvested power to drive the operations of valve 327. It is appreciated the sensor 325 and valve 327 can also be disposed low to the ground and also in close proximity to the plantea 310.

Gateway 390 facilitates communication between network cloud 370 and the control box 320. For example, the gateway 390 can receive update data from network cloud 370 and transmit the update data to the control box 320 to update firmware of the control box 320. Moreover, the control box 320 can send sensor and status information to the network cloud 370 via the gateway 390. According to some embodiments, gateway 390 executes a Linux operating system and can perform several function performed by network cloud 370, for example, in the case that the network cloud 370 is unavailable. These functions can include distributing updates, monitoring status of sensor 325, and scheduling workloads to be performed by control box 320, such as operating valve 327.

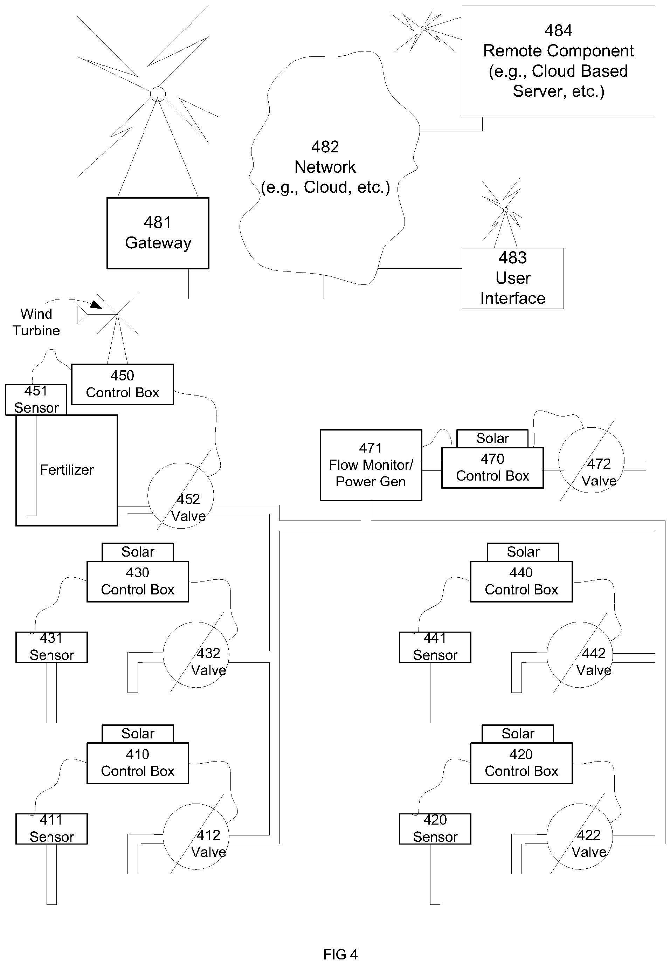

It is appreciated that a plurality of power self harvesting control boxes can be utilized (e.g., in a field, a forest, a garden, an orchard etc.) to control irrigation (e.g., across the field, forest, garden, orchard, etc.). Figure 4 is a block diagram of exemplary multiple control box implementation system in accordance with one embodiment. The multiple control box implementation system includes control boxes 410, 420, 430, 440, 450, and 470, sensors 411, 421, 431, 441, 451, and 471, valves 412, 422, 432, 442, 452, and 472, gateway 481, network 482, a user interface 483, and remote component 484. Control boxes 410, 420, 430, 440, 450, and 470 are power self harvesting control devices (e.g., similar to other power self harvesting devices described herein). Control boxes 410, 420, 430, 440, 450, and 470 are communicatively coupled to sensors 411, 421, 431, 441, 451, and 471 respectively. Control boxes 410, 420, 430, 440, 450, and 470 are communicatively coupled to valves 412, 422, 432, 442, 452, and 472 respectively. Control boxes 410, 420, 430, 440, 450, and 470 are can be communicatively coupled to network 482. Control boxes 410, 420, 430, 440, 450, and 470 can be coupled to network 482 directly via cellular communications. Control boxes 410, 420, 430, 440, 450, and 470 can be coupled to network 482 via gateway 481. Gateway 481 may communicate with network 482 via various mediums/mechanisms/modalities (e.g., wirelessly, wired, telecommunication systems, cellular, etc.).

It is appreciated user interface 483 and remote component 484 can communicate with network 482 via various mediums/mechanisms/modalities (e.g., wireless, wired, telecommunication systems, cellular, etc.). In one embodiment, control boxes 410, 420, 430, 440, 450, and 470 communicate with user interface 483 and remote component 484 (e.g., via network 482). A user interface can be associated with a local user (e.g., a local farmer, a security patrol guard, etc.) or a remote user (e.g., a manufacturer of the control boxes, a government facility, etc.).

Control boxes 410, 420, 430, and 440 receive information from sensors (e.g., 411, 421, 431, and 441) and direct control of valves (e.g., 412, 422, 432, and 442). In one embodiment, control boxes 410, 420, 430, and 440 operate similar to control box 230 and 320. Sensors 411, 421, 431, and 441 monitor conditions and characteristics of the soil (e.g., similar to instrumentation component 235, sensor 325, etc.). The conditions and characteristics can include moisture content, fertilization levels, and so on. Valves 412, 422, 432, and 442 open and close to direct flow of liquid to the soil (e.g., similar to control component 237 and valve 327). Control box 450 can direct valve 452 to dispense fertilizer into the irrigation pipes based upon input from gateway 481. Sensor 451 can provide control box 450 information on the level of fertilizer which can be forwarded to the local user via control box 450, gateway 481, and cloud 482. Control box 470 can direct valve 472 to dispense water into the irrigation system based upon input from gateway 481. Flow monitor/power generator 471 can provide feedback information to control box 470 on measurement of actual water flow into the pipes of the irrigation system.

It is appreciated that self harvesting power can originate from various sources. Control boxes 410, 420, 430, and 440 harvest energy/power from solar cells. Control box 450 harvest energy/power from a wind turbine. Control box 470 can harvest energy/power from characteristics of the fluid in the irrigation pipes (e.g., flow through a propeller, pressure differential, etc.). In one embodiment, control box 470 can self harvest energy/power from multiple components concurrently (e.g., solar, characteristics of the fluid in the irrigation pipes, etc.). In one embodiment, control box 470 can utilize self harvest energy/power (e.g., solar, etc.) and energy/power generated locally (e.g., from an external flow monitor/power generator 471, etc.).

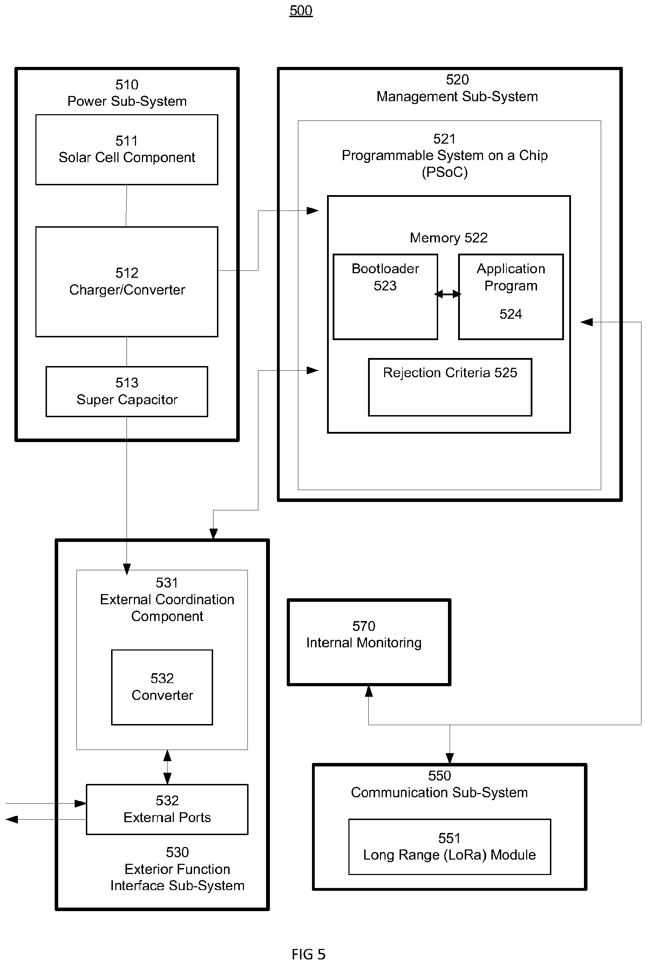

Figure 5 is a block diagram of design components of an exemplary power self harvesting control device 500 in accordance with one embodiment in more detail. Power self harvesting control device 500 includes power sub system 510, management sub system 520, exterior function interface sub-system 530, communication sub-system 550, and internal monitoring sub-system 570. Management sub system 520 is coupled to power sub system 510, exterior function interface sub-system 530, communication sub-system 550, and internal monitoring sub-system 570.

Power sub-system 510 includes solar cell component 511 coupled to charger/converter 512 which in turn is coupled to super capacitor sub-system 513. Solar cell component 511 includes a solar cell configured to covert sun light and IR radiation into electricity. The electricity from solar cell component is fed into charger/converter 512 which extracts energy from the solar component. In one embodiment, the charger/converter 512 extracts microwatts to milliwatts of energy. The charger/converter 512 can boost the extracted energy to an appropriate voltage level for charging the super capacitors of the super capacitor sub-system. In one exemplary implementation, the charger/converter 512 can also include a buck converter to regulate a voltage level supplied directly to other components of the power self harvesting control device 500.

In one embodiment, charger/converter 512 controls delivery of power from the super capacitors to the rest of the power self harvesting control device 500. In one exemplary implementation, charger/converter 512 does not allow other components in power self harvesting control device 500 to turn on unless there is sufficient energy available. In one exemplary implementation, charger/converter 512 can also initiate measures to safely power down components of power self harvesting control device 500 before sufficient energy runs out or is unavailable. In one embodiment, a bottom end threshold for the rest of the system is approximately 2.2 volts. In one exemplary implementation important information (e.g., state/condition of power self harvesting control device 500 components, state/condition of external components, information associated with application program directives, etc.) is safely stored before power is lost. The information can be stored in RAM or flash memory in the management sub-system 520. According to some embodiments, the memory 522 includes a flash memory module for storing instructions and fixed data, and SRAM for storing dynamic data, such as sensor data. The information can also be communicated remotely (e.g., a remote server, a cloud server, etc.).

Management sub-system 520 includes a microprocessor and/or Programmable System on Chip (PSoC) 521. In one embodiment, the PSoC 521 can be a Bluetooth low energy (BLE) compatible component/module. PSoC 521 can direct management of various operations of power self harvesting control device 500. In one exemplary implementation, PSoC 521 includes a PSoC core. The PSoC core can include a microprocessor, memory, and reconfigurable communication buses and other reconfigurable circuitry all integrated within a common integrated circuit. The PSoC core can direct management of various operations of external components (e.g., components communicatively coupled to exterior function interface sub-system such as sensors, valves, etc.). The PSoC includes a memory (e.g., flash memory and/or RAM) 522 for storing data, including a bootloader 523 and an application program 524. The bootloader enables the PSoC 521 to be updated over a communication interface. The bootloader is executed when the PSoC turns on and waits for a short period of time to receive a command indicating if the bootloader should wait to receive data from an external device (host) to update the PSoC 521; otherwise, the bootloader boots to the existing application program 524 stored in memory 522.

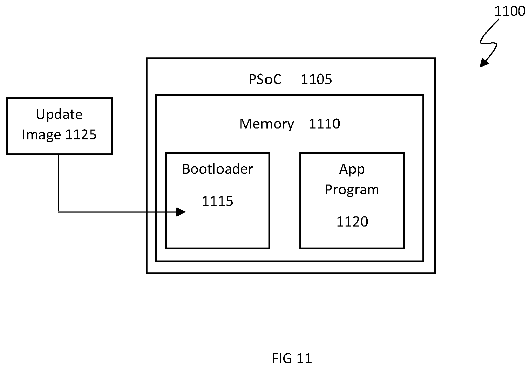

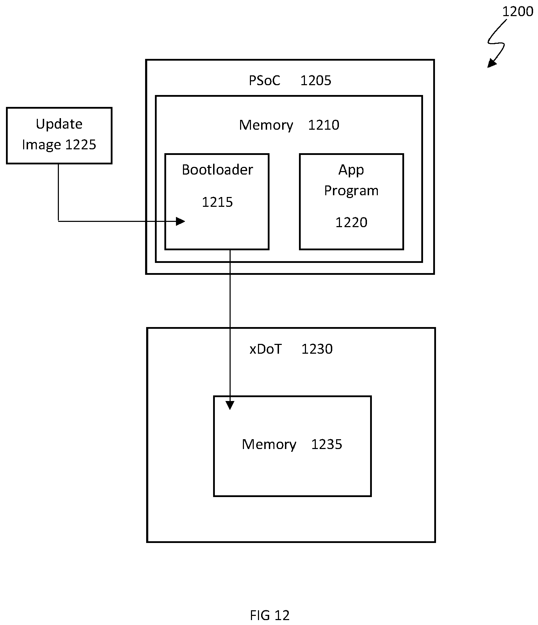

The PSoC 521 can be wireless reprogrammed by a local gateway or remote device, for example, using communication sub-system 550, which can include an xDoT radio for facilitating wireless communication between devices. The update can be downloaded to the node when the node withstands a set of rules defined in rejection criteria 525, which may be stored in the node's memory 522. The node can download the entire update or pieces of the update according to the amount of energy stored by the node, among other considerations. In one embodiment, the PSoC downloads a new bootloader image to memory 522 of PSoC 521. The PSoC then boots to the new bootloader image 523 stored in memory 522 and begins downloading an update to memory 522 (see Figure 11). The update can include firmware for updating the communication sub-system 550 or the application image for updating the application program 524 of the PSoC 521. A firmware update for the communication sub-system 550 can be downloaded by bootloader 523 to the memory 522 of the PSoC 521. When the firmware update is completely downloaded to memory 522, the bootloader 523 transfers the firmware update to the memory 522 of communication sub-system 550 block-by-block until the entire image is transferred to reprogram the communication sub-system 550 (see Figure 12). In one embodiment, PSoC 521 can also tack and react to low/critical energy levels.

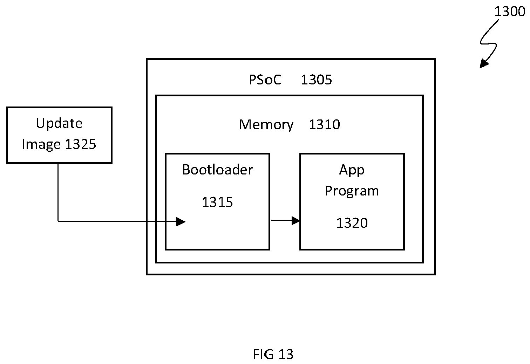

The bootloader 523 can download an application image to memory 522 for updating application program 524 of PSoC 521. The application program 524 generally defines the operation and configuration of the management sub-system 520. After the bootloader 523 downloads the entire application image to update the application program 524, the PSoC 521 boots to the new application program 524 and the update process is complete (see Figure 13). In some cases the update does not include a firmware update for the communication sub-system 550 and only the bootloader 523 and the application program 524 are updated.

According to some embodiments, PSoC 521 includes a VDD interface to receive power from the power sub system 510. PSoC 521 includes a general purpose input/output (GPIO) interface. The GPIO interface can be analog to Analog to Digital Converter (ADC) protocol and Universal Asynchronous Receiver Transmitter (UART) protocol compatible. The GPIO interface can communicatively couple with exterior function interface sub-system 530. PSoC 521 can include an Inter-Integrated Circuit (I2C or I2C) protocol compatible interface for communicatively coupling with communication sub-system 550 and internal monitoring sub-system 570.

The exterior function interface sub-system 530 controls input/output (IO) functionality and as such includes external coordination component 531 and external ports 532. External coordination component 531 can perform various coordination functions for interaction with exterior components including receiving signals as input and generating signals for output. In one embodiment, external coordination component 531 includes converter 532 that converts signals to an appropriate level compatible with exterior devices. In one embodiment, external coordination component 531 configures signals for driving external components and for receiving sensor data from external components. External ports 532 are physical interfaces for communicatively coupling to external components.

Communication sub system 550 is operable to communicate with external communication components/networks via wireless network 220. Communication sub system 550 includes long range (LoRa) module 551. In this embodiment, communication sub system 550 communicates with other components (e.g., gateway 250, gateway 390, network 220, network 370, etc.) via LoRa communications. The long range (LoRa) module 551 can include a XDOT NA compatible chip. In one embodiment, communication sub system 550 device can perform wireless communication of the power self harvesting control device 500 and is controlled by the programmable microprocessor. In one embodiment, communication sub-system 550 is utilized to communicate information associate with programming the programmable microprocessor.

Internal monitoring sub-system 570 can monitor internal conditions. Internal monitoring sub-system 570 can include a light sensing component configured to sense light exposure to the interior of the power self harvesting control device 500. The detection of light can be used to indicate opening/tampering with the enclosure of the power self harvesting control device 500. Internal monitoring sub-system 570 includes a humidity and pressure sensor configured to sense humidity and pressure exposure to the interior of the power self harvesting control device 500. The detection of moisture and pressure can be used to indicate a sealant failure in an opening/port to the interior of the power self harvesting control device 500.

In one embodiment, power self harvesting control device 500 includes features to prevent unauthorized access to information. In one embodiment, internal communication buses prevent snooping of communications within the power self harvesting control device 500. In one exemplary implementation, I2C buses are used for communicating information.

It is appreciated the components of power self harvesting control device 500 can cooperatively operate to manage power generation and consumption. In one embodiment, the management sub-system 520 can anticipate the power needs and provide relevant information to other components of power self harvesting control device 500. In one exemplary implementation, the management sub-system 520 determines the relevant characteristics/requirements of a task or operation (e.g., amount of energy needed to perform the task, the timing related information such as when will the task occur, how long/duration of the task, etc.). The operation can be internal (e.g., tasks/processing performed by management sub system 520, power sub-system 510 external coordination component 531, communication sub-system 550, etc.).

The management sub-system 520 can utilize information received from various sources in determining the relevant characteristics/requirements of a task or operation. The management sub-system can receive information (e.g., application/program directives, etc.) from an upstream component (e.g., the cloud, a remote server, etc.). The management sub-system can receive information from external peripherals (e.g., soil moisture sensor, day light sensor, status of a peripheral state/operation, a value is closed, a value is part way through process of opening, amount of energy currently being generated by an energy generation component, energy generation from a solar cell, etc.).

In one embodiment, based information the received information the management sub-system 520 can determine the need for an operation to occur. The management sub-system 520 can determine which operation is to be performed. The management sub-system 520 can determine timing characteristics associated with an operation (e.g., when it needs to occur, the duration of the operation, etc.). The need/timing can be triggered by various things including a scheduled periodic initiation, an external environment related initiation (e.g., moisture level trigger, available day light, etc.), external peripheral component (e.g., open valve condition, energy level being produced by an energy generation component, etc.).

In one embodiment, based on power consumption characteristics of an operation the operation management sub-system 520 can determine the amount of energy/power needed and provide direction on power generation and energy storage. Management sub-system 520 can receive information on the power consumption characteristics from various sources, including a remote component (e.g., the cloud, a remote server, etc.) and a peripheral component (e.g., a monitor component, a motor component, a moisture detector, a valve, etc.). In one embodiment, management sub-system 520 can send information to other components, including power sub-system 510 and external coordination component 531, regarding aspects of power generation and energy storage (e.g., information on commencing and ending power generation/storage, amount of energy to generate/store, etc.).

In one embodiment, management sub-system 520 can direct power sub-system 150 to regulate the power generation and energy storage within certain thresholds. In one exemplary implementation, low end power generation and energy storage thresholds are set to provide enough energy/power to perform operations and high end energy generation and storage thresholds are set to maintain/facilitate component longevity. The power generation and energy storage thresholds can be set to comply with safety concerns.

In one embodiment, management sub-system 520 can direct power consumption. The power consumption can be associated with internal operations and external peripheral component operations. In one exemplary implementation, management sub-system 520 receives information on a status of power generated and energy stored by power sub-system 150. If there is sufficient energy/power to perform an operation, management sub-system 520 can direct initiation of an operation (e.g., programming, monitoring, communication, execute peripheral device function, drive motor, etc.). The communication can be with remote upstream components (e.g., a remote server, the internet, a cloud component, etc.). The communication can be with local downstream components (e.g., a peripheral device, a monitor, a motor, etc.).

In one embodiment, exterior function interface sub-system 170 includes energy storage components. The energy storage components can be used to supply power for peripheral component operations. In one exemplary implementation, the energy storage components can include super capacitors. The energy storage components can be similar to other energy storage components in the system (e.g., super capacitors, non-removable, etc.). Management sub-system 520 receives information on a status of power generated and energy stored by exterior function interface sub-system 170. If there is sufficient energy to perform an operation, management sub-system 520 can direct initiation of an operation that consumes energy/power generated and stored by exterior function interface sub-system 170. In one exemplary implementation, management sub-system 520 instructs exterior function interface sub-system 170 to forward the operation initiation directions to a peripheral component and supply power to the peripheral component to perform the operation. The peripheral component operations can include monitoring (e.g., detecting soil moisture, monitoring environmental conditions, detecting motion, etc.) and active functions (e.g., opening a valve, closing a valve, other motor operations, etc.).

In one embodiment, the amount of energy to perform the peripheral component operation is known and the energy storage components are charged to that amount. During the peripheral component operation energy is drained from the energy storage components (e.g., super capacitors included in the exterior function interface sub system, etc.). In one exemplary implementation, when the peripheral component operation no longer needs energy, the exterior function interface sub system can stop charging the corresponding energy storage components. The charging can be suspended /postponed until needed for a peripheral component operation.

It is appreciated that different size energy storage components can be utilized. The energy storage components can be coupled in a variety of configurations (e.g., series, parallel, both, etc.). The energy storage components can be sized or configured for operations performed by components operating in a particular domain/partition. The domain/partition can be based on various factors/characteristics (e.g., voltage level. inclusion on a printed circuit board, a particular integrated circuit chip, etc.). In one embodiment, a main printed circuit board includes energy storage components of power sub-system 510 to supply power to components that operate at a first voltage (e.g., 2.0 to 3.0, below 3.0 etc.) and a secondary printed circuit board includes energy storage components of exterior function interface sub system 531 to supply power to components that operate at a second voltage (e.g. 5.0 to 7.0, above 3.0, etc.).

It is appreciated, management sub-system 520 can direct operations based on various information. Management sub-system 520 can receive information regarding a potential problem condition or state (e.g., unexpected reduced power generation, contradictory indication of measured water flow and closed valve status, etc.). The management sub-system 520 can analyze the information and determine a potential problem. In one exemplary implementation, unexpected reduced power generation during daylight time can indicate a problem with the power generation component (e.g., blocked solar cell by dirt, animal feces, etc.). In one exemplary implementation, contradictory indication of measured water flow and closed valve status can indicated a problem with an irrigation pipe (e.g. broken, leaking, etc.). The management sub-system 520 can perform various operations in response to the potential problems. In one embodiment, management sub-system 520 can forward an alarm warning to another component (e.g., a remote cloud server, a local user/farmer, etc.). In one embodiment, management sub-system 520 can direct protective/preemptive operations. The protective/preemptive operations can include locally storing various information (e.g., programming information, operational conditions, status of peripheral components, environmental conditions, etc.) before a failure occurs.

Embodiments of the present invention provide methods for wirelessly updating and reprogramming irrigation control devices (nodes/control nodes) over long ranges without interfering with the normal operation of the irrigation devices. The control nodes are typically deployed in a plot or field alongside crops and other farming equipment and include a small solar panel for harvesting energy. Each node is associated with a node type or group and has a unique ID and also an encryption key. Based on the node type or group, and/or other considerations, such as the operating schedule of the node, the time of day, current weather conditions (e.g., temperature, humidity, amount of sunlight), historical weather conditions, predicted future weather conditions, soil type, etc., embodiments of the present invention determine if a respective node is in condition to begin receiving/downloading an available update. A primary goal of the methods described according to some embodiments is determining if a respective node has enough energy stored to download an update file (e.g., a firmware image, an application image, a bootloader image, a configuration update, an irrigation schedule etc.) based on the operating schedule of the node and the amount of power being generated by the node's solar panel, among other factors. In addition to checking if the control device has enough energy to complete the reprogramming, checks are also made to make sure the control device is left with enough energy to continue to perform its scheduled duties. If sufficient energy is not available, the control device will be left out of the programming cycle.

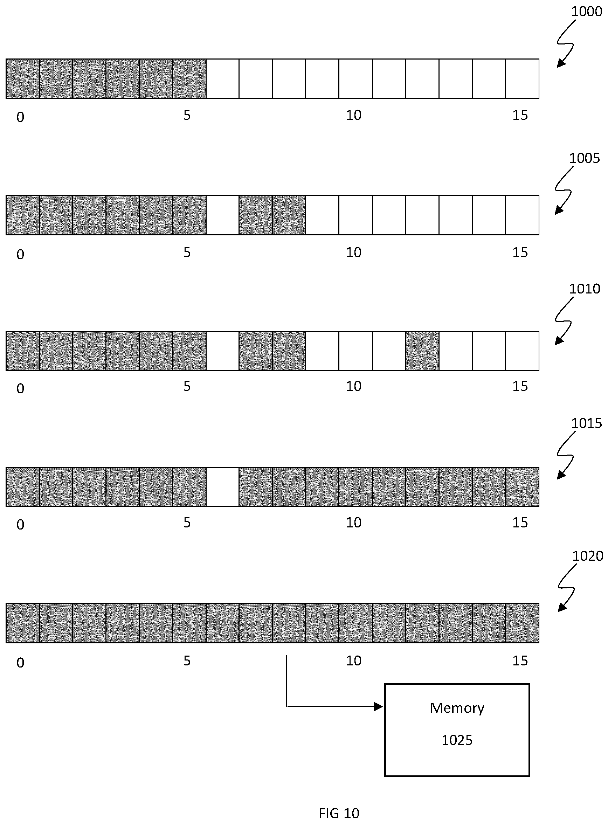

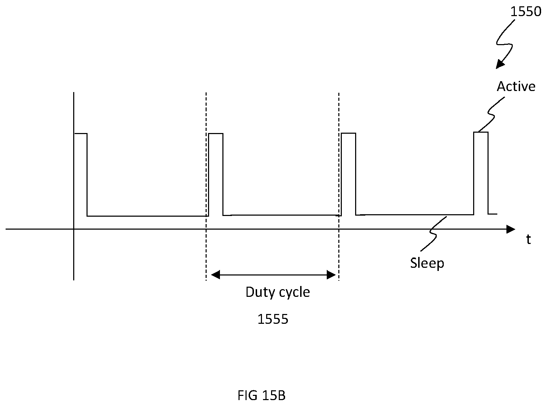

Often a farming operation will employ hundreds or thousands of nodes configured to control irrigation equipment, such as irrigation valves, while obtaining and monitoring data from sensors coupled to the nodes. Some nodes can be connected to multiple sensors and multiple valves. To conserve energy, the nodes typically are in a sleep state for periods of time (e.g., 15 minutes), and wake up regularly, for brief periods of time, to perform basic functions, such as opening and closing irrigation valves and communicating status information to a local gateway or remote device (e.g., a server or cloud computing device). During these periods of time when the nodes are temporarily awake and online (see Figure 15B), the nodes can receive data from the gateway in communication with the nodes via the wireless network, and the data can indicate a signal that an update is available for the nodes (e.g., a ready signal). If a respective node is in condition to receive the update, the node will stay awake until the updated is downloaded and installed, or the node can elect to download a portion of the node until more energy is available to the node (see Figure 10).

Although the control nodes discussed herein are generally described within the context of controlling farming and irrigation equipment, the control nodes can be used to monitor and control a wide variety of equipment common to other industries and use cases within the scope of embodiments of the present invention.

According to some embodiments the gateway or remote device in communication with a node is initially responsible for determining if the node is in condition to receive the available update. The node can accept the download responsive to a ready signal broadcast by the gateway or decline to download the update if the data available to the node indicates that the node does not withstand the rejection criteria defined for the node. In some embodiments, the node only receives a ready signal if the server has already determined that the node is suitable for the current programming cycle. In some cases, a node will only partially download an update image based on the energy available to the node. For example, the update can be made available as a series of uniquely identified data blocks or chunks, and the node can download individual blocks or a range of blocks of the update based on the available energy. The blocks downloaded by a node can be stored in non-volatile memory (e.g., flash memory) of the management sub-system (e.g., a PSoC) until the entire image has been downloaded.

When the update is scheduled for complete download, the blocks are transferred one block at a time from the bootloader until the entire image is transferred to the destination (e.g., a communication sub-system or the management sub-system). In one embodiment, data is first received in the management sub-system, e.g., the PSoC. Each block contains a block ID as well as a respective checksum. The entire image and/or each individual chunk is verified using a checksum and error correction may be performed. Once the image is verified, the node jumps to the beginning of the new image in the case where the image is an application program for execution on the PSoC (see Figure 13). In the case where the image is for the communication subsystem, the image will be transferred from the PSoC memory to the communication subsystem, then executed (see Figure 12). In a case where the image is damaged or corrupted and the error was not identified by the checksum or error correction process, a watchdog executed by the node detects the error and forces the node to reset. The node will then boot to the bootloader and wait for further instructions received by its communication system.

Some nodes that operate on a limited power budget may not have enough energy stored to download the update when the update is initially made available to the node, and the gateway or remote device will try to provide the update to these nodes at a later time. The gateway or remote device can also determine that a respective node is not in condition to download the update based on rejection criteria and can retry the update at a later time. If a node has already partially downloaded an update, the node can request the missing blocks or range of blocks to complete the update.

The rejection criteria used to determine if a node is in condition to receive an update is customizable set of rules that can be defined for different types or groups of nodes. Nodes are typically grouped based on their function, such as what devices they control, where they are installed, the soil type or crops they are associated with, etc. One consideration of the rejection criteria is the size of the update image. According to some embodiments, the node will assume that a full flash of the bootloader image, an xDoT image, and a PSoC image is required. The node and/or the remote server then determines if there is enough energy stored in the node to download the full update.

The rejection criteria can also include considerations regarding the upcoming operations of respective nodes, such as a watering schedule to be performed by the node and/or its sensor checking schedule. This information is pertinent as a measure of expected energy the node will need to keep in reserve after the programming cycle in order to perform its scheduled duties. The node or another device can estimate an amount of energy/power required to perform scheduled operations and can reject the update if there is not enough energy/power reserved to perform the scheduled operations and perform a full update. The amount of energy/power reserved for the scheduled operations can vary depending on the node type or the group to which the node belongs. For example, a node that is configured to read data from a single sensor may only be required to activate the sensor using 5V, and therefore the energy/power budget reserved by the node is relatively small. For a node that needs to periodically open and close a valve, the energy buffered is only moderate. On the other hand, for a node that periodically reads moisture data from several soil moisture sensors (e.g., 6-9 sensors), the amount of energy reserved may be substantial. In this way, the node and/or the remote server can aim to ensure that an update downloaded and installed by the node will not interfere with the normal operation of the node because the server will only download and install the update to the node when the node has enough energy reserved to perform these scheduled functions.

Other factors of the rejection criteria that can be considered include the time of day when the update is made available. For example, if the update is made available to the node early in the day (e.g., 7 AM), the node can expect to generate and store more energy throughout the day while sunlight is reaching the solar panels of the node. On the other hand, if an update is made available to nodes at the end of the day, the node can expect to generate little additional power from its solar panels, and therefore the server will have to determine if the node has already stored enough energy to download and install the update in addition to any power required to perform any scheduled operations that will take place over night.

Moreover, the rejection criteria can include weather/environmental factors that may affect the amount of the energy stored by the node throughout the day. For example, in the case of severe weather, the node may not be able to generate enough power throughout the day to accommodate a full download and flash of the update image. In this case, the server may reject the update for the node until the severe weather conditions have passed. According to some embodiments, the rejection criteria can include criteria based on current weather conditions (e.g., temperature, humidity, amount of sunlight), historical weather conditions, predicted future weather conditions, etc.

With regard to Figure 6A, an exemplary sequence of computer-implemented steps 600 for automatically wirelessly downloading and installing an update for a control node or group of control nodes is depicted according to embodiments of the present invention. Although the control nodes described with regard to Figure 6A generally relate to devices for controlling farming and irrigation equipment, the control nodes can be used to monitor and control a wide variety of equipment outside of the context of farming and irrigation.

At step 605, a local gateway or remote server determines that a new update (e.g., firmware) is available for a node or group of nodes (e.g., 1000 double-valve controllers). In one embodiment, this update may pertain to the application program executed by the PSoC controller (see sub-system 160 of Figure 1D) and/or the programming of the communication subsystem (see sub-system 190 of Figure 1D), or both.

At step 610, the local gateway or remote server determines which nodes are in condition to download and install the update according to the status of the individual nodes and the rejection criteria defined for the nodes. The rejection criteria used by the local gateway, remote server, or the nodes to determine if the nodes are in condition to download and install the update can be based on an amount of energy stored in the node, the future operating schedule and workload of the node, the time of day, weather conditions, soil types, etc. According to some embodiment, the remote device initially determines if each node is in condition to download and install the update, and each respective node can refuse the update based on the data available to the node (e.g., voltage levels), which may be different or more accurate than the data available to the remote device. Nodes that are in condition to receive the update stay awake to receive the update. Nodes that are not in condition to receive the update can go to sleep or perform their normally scheduled operations, and the remote device will try to send the update to these nodes at a later time.

At step 615, the local gateway or remote device broadcasts data (e.g., a ready signal) to the node or group of nodes in condition to receive the update indicating that the update is ready to be distributed.

At step 620, the nodes that are ready to accept the download and that have received the ready signal from the server will remain in the wake state to receive the download. The nodes or group of nodes determined to be in condition to download and install the update receive the update from the local gateway or remote device, which may include a firmware image, an application image, a bootloader image, etc., and store the update in memory. The programming information may be sent in individual chunks over the wireless network from the gateway to the nodes.

At step 625, the nodes that received the update program one or more components using the received update. The components that are updated may include a management sub-system (e.g., a PSoC), a bootloader stored in the management sub-system, and/or a communication sub-system (e.g., an xDoT).

Steps 610-625 can be repeated until all nodes in the group of nodes have completely received and installed the update successfully. To successfully receive the update, all the chucks that are broadcast must be individually verified by the control device by checksum data associated with each chunk. Those chunks that were received with error, may be requested to be resent to the control device by indication chunk number. In such a case, the server and/or the gateway will resend the chunk.

According to some embodiments, each step of method 600 is verified using a checksum and/or error correction to prevent or detect corruption of the installed firmware. Nodes receiving the download properly then execute the newly downloaded program and return to their normal operations.

With regard to Figure 6B, an exemplary sequence of computer-implemented steps 650 for automatically downloading and installing an update for a control node or group of control nodes is depicted according to embodiments of the present invention. Although the control nodes described with regard to Figure 6B generally relate to devices for controlling farming and irrigation equipment, the control nodes can be used to monitor and control a wide variety of equipment outside of the context of farming and irrigation.

At step 655, a server system determines that a new update (e.g., firmware) is available for a node or group of nodes (e.g., 1000 double-valve controllers).

At step 660, the server system broadcasts data (e.g., a ready signal) to the node or group of nodes indicating that the update is ready to be distributed.

At step 665, the nodes individually respond to the remote device to indicate if each respective node is in condition to download and install the update based on rejection criteria defined for the node or node type. The rejection criteria can be based on an amount of energy stored in the node, the future operating schedule and workload of the node, the time of day, weather conditions, soil types, etc. According to some embodiment, the remote device initially determines if each node is in condition to download and install the update, and each respective node can refuse the update based on the data available to the node (e.g., voltage levels), which may be different or more accurate than the data available to the remote device. Nodes that are in condition to receive the update stay awake to receive the update. Nodes that are not in condition to receive the update can go to sleep or perform their normally scheduled operations, and the remote device will try to send the update to these nodes at a later time.

At step 670, the nodes or group of nodes determined to be in condition to download and install the update receive the update from the local gateway or remote device, which may include a firmware image, an application image, a bootloader image, etc., and store the update in memory.

At step 675, the nodes that received the update program one or more components using the received update. The components that are updated may include a management sub-system (e.g., a PSoC), a bootloader stored in the management sub-system, and/or a communication sub-system (e.g., an xDoT).

Steps 660-675 can be repeated until all nodes in the group of nodes have completely received and installed the update successfully. To successfully receive the update, all the chucks that are broadcast must be individually verified by the control device by checksum data associated with each chunk. Those chunks that were received with error, may be requested to be resent to the control device by indication chunk number. In such a case, the server and/or the gateway will resend the chunk.

According to some embodiments, each step of method 650 is verified using a checksum and/or error correction to prevent or detect corruption of the installed firmware.

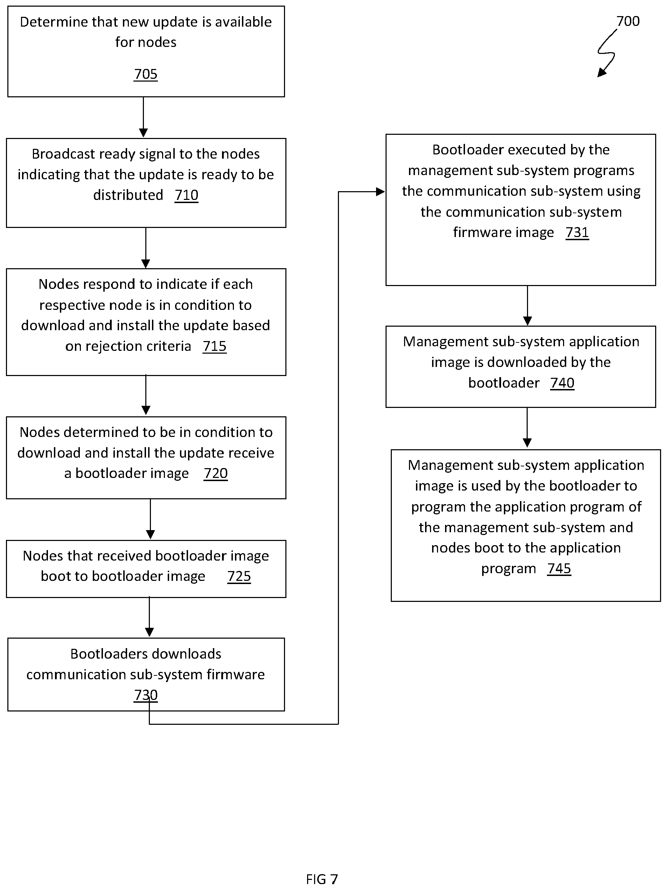

With regard to Figure 7, an exemplary sequence of computer-implemented steps 700 for automatically downloading and installing a bootloader image, a management sub-system (e.g., PSoC) image, and/or a communication sub-system image (e.g., xDoT) for updating a control node is depicted according to embodiments of the present invention. Although the control nodes described with regard to Figure 7 generally relate to devices for controlling farming and irrigation equipment, the control device can be used to monitor and control a wide variety of equipment outside of the context of farming and irrigation.

At step 705, a local gateway or remote device (e.g., a server or cloud computing device) determines that a new update is available for a node or group of nodes. The new update can include a bootloader image, a management sub-system (e.g., PSoC) application image, and/or a communication sub-system (e.g., xDoT) firmware image. In some cases, only the bootloader image and management sub-system firmware image are required to be updated. The bootloader image can be used to update a bootloader stored in a memory of a PSoC, and the updated bootloader can be used to update the application program stored in the memory of the PSoC. In another example, the bootloader image can be used to update the bootloader of a PSoC, and the updated bootloader can be used to update the firmware of an xDoT and the application program of the PSoC (see Figures 12-13). The bootloader image, the communication sub-system firmware image, and the management sub-system application image are downloaded separately. In the most common case, only the bootloader image and PSoC application image are downloaded during the update. According to some embodiments, the firmware currently being used by each node is stored in a database, and the firmware version information in the database is updated by the node each time the node wakes from sleep.

At step 710, the local gateway or remote device broadcasts data (e.g., a ready signal) to the node or group of nodes indicating that the update is ready to be distributed to the nodes. In response to receiving the ready signal, a node will remain in the wake state pending the download.

At step 715, the nodes individually respond to the remote device to indicate if each respective node is in condition to download and install the update based on the rejection criteria defined for the node (e.g., power availability, operating schedule, time of day, etc.). According to some embodiment, the local gateway or remote device initially determines if each node is in condition to download and install the update, and each respective node can refuse the update based on the data available to the node (e.g., voltage levels), which may be different or more accurate than the data available to the remote device. Nodes that are in condition to receive the update stay awake to receive the update. Nodes that are not in condition to receive the update can go to sleep or perform their normally scheduled operations, and the local gateway or remote device will try to send the update to these nodes at a later time.

At step 720, the nodes or group of nodes determined to be in condition to download and install the update receive a bootloader image and store the bootloader image in a memory of the management sub-system.

At step 725, the nodes that received the bootloader image switch control (e.g., boot) to the bootloader image. The bootloader is then used to download one or more additional images for programming the management sub-system (e.g., PSoC) and/or the communication sub-system (e.g., an xDoT) of the node. In one embodiment, the PSoC memory is used as a download buffer for all program updates. Therefore, updates to the xDoT chip will be downloaded to the PSoC memory first, then transferred to the xDoT chip under bootloader control. However, this is merely one implementation, and in others, the xDoT image could be downloaded directly to the xDoT chip.

At step 730, if the update includes a communication sub-system firmware image, the bootloader downloads the communication sub-system firmware image to the memory of the management sub-system first. Otherwise, at step 740, a management sub-system application image is downloaded by the bootloader to the memory, and step 731 is skipped.

At step 731, if a communication sub-system firmware image was downloaded at step 730, the bootloader executed by the management sub-system programs the communication sub-system using the communication sub-system firmware image. The communication sub-system reboots and performs a two-way handshake with the local gateway or remote device to confirm that the communication sub-system firmware update was completed successfully and that the communication sub-system is fully functional for communicating with the local gateway or remote device. This step may also include transmitting energy/power information and work schedule information from the nodes to the local gateway or remote device. If the update made available to the node includes a communication sub-system firmware update but does not include a management sub-system application image, the update process performed by steps 700 ends at step 731.

At step 740, if the update includes a management sub-system application image, the management sub-system application image is downloaded by the bootloader to program the application program of the management sub-system stored in the memory of the control node.

At step 745, the management sub-system application image optionally downloaded by the bootloader at step 740 is used by the bootloader to program the application program of the management sub-system stored in the memory. The management sub-system then boots to the new application program from the memory to operate the management sub-system and all requisite updates are complete.

According to some embodiments, each step of method 700 is verified using a checksum and/or error correction to prevent or detect corruption of the installed firmware.

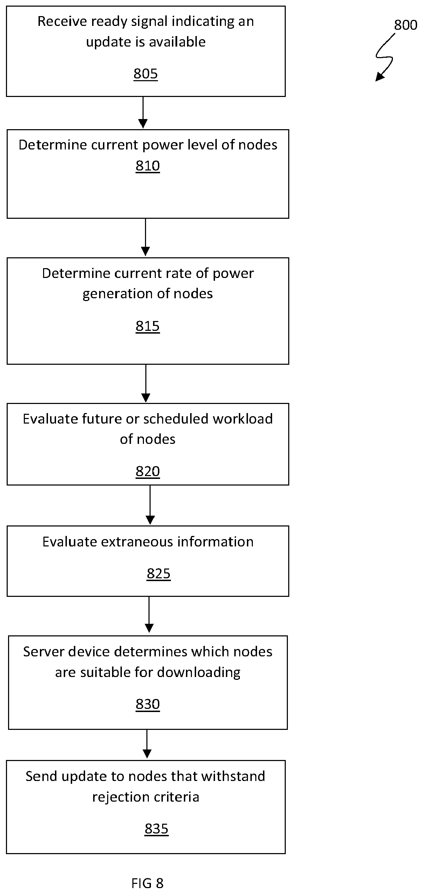

With regard to Figure 8, an exemplary sequence of computer-implemented steps 800 for automatically determining rejection criteria to update a group of control nodes is depicted according to embodiments of the present invention.

At step 805, a ready signal is received by the group of nodes indicating that an update for the nodes is available. The update can include a bootloader image, a communication sub-system firmware image, and/or a management sub-system application image. The ready signal can be broadcast by a remote device or local gateway in communication with the nodes. According to some embodiments, the ready signal includes data indicating the size of the update.

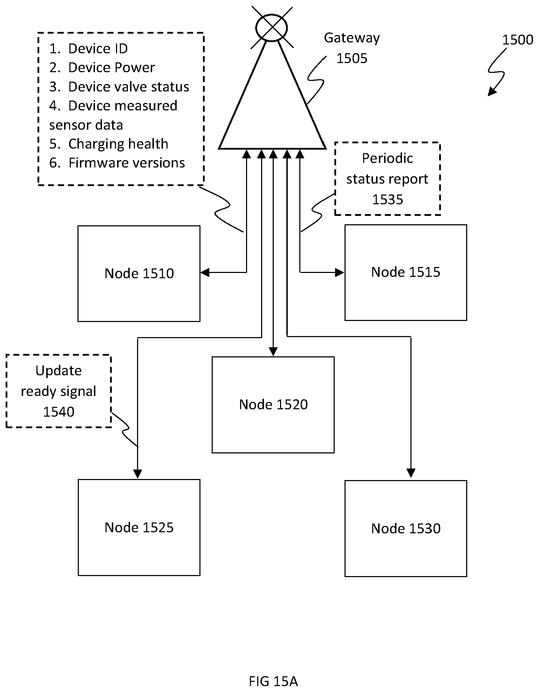

At step 810, a current energy level of the nodes is determined by the server based on information previously periodically broadcast from the control devices to the server (see Figure 15A). For example, the amount of energy stored in the super capacitors of respective irrigation control nodes can be determined by circuitry of each respective irrigation control node and transmitted wirelessly to a local gateway or remote device.

At step 815, the current rate of power generation of the nodes is determined. For example, the amount of power generated by the node's integrated solar panel can be determined by a harvester circuit of the node's power sub-system. Again, the information can be determined by the server based on information previously periodically broadcast from the control devices to the server. In some cases the power being generated by the node may be less than the amount of power currently being used by the node, and the node will be unable to download and install the update until more power is generated in stored by the node. Moreover, according to some embodiments, the current time of day is evaluated at step 815 to determine how much power the node can be expected to generate before nightfall. For example, if an update is made available early in the day, the node can expect to generate power from sunlight throughout the day. On the other hand, if the update is made available near the end of the day, the node will not be able to generate a significant amount of power until the following date and will have to rely on the energy currently stored in the node.

At step 820, a future or scheduled workload of each respective node is evaluated to determine how much energy/power reserve needs to be available to the node after the programing cycle so that the node can continue to perform its duties after the reprogram cycle. The server knows the control device's schedule and also the current state of valves and sensors associated with the control device. Again, some of this information can be determined by the server based on information previously periodically broadcast from the control devices to the server. The workload can include an estimated time that the node will be awake, and can further include tasks that the node is expected to perform. The tasks typically include activating and receiving data from one or more sensors. The sensors can include sensors for measuring soil moisture levels, temperature, humidity, pressure, motion, water flow, wind speed, sunshine/light levels, etc. Moreover, the workload can include controlling or activating equipment such as an irrigation valve or water source. Based on the future workload determined for each respective node, an estimated amount of power to perform the workload is determined and evaluated as part of the rejection criteria for determining if each respective node is in condition to download and install the update.

At step 825, extraneous information can be evaluated by the local gateway or remote device as part of the rejection criteria. The extraneous information can include past, present, or predicted weather data, historical power generation information associated with the group of nodes, etc.

At step 830, using the information obtained from steps 810-825, the server device determines which nodes are suitable for download. Those nodes that are not suitable for download are excluded from the update subset. At step 830, the server starts with the known energy reserve of each node and the recharging level of each node, which indicate a total power budget. The server then subtracts from the power budget, an amount of power expected to the consumed by the update process plus the expected power needed by the device to perform its normal functions after the update. If sufficient energy does not remain in the control device, it will be excluded from the update subset, otherwise, it will be included.

At step 835, the update is received by the nodes of the group of nodes that withstand the rejection criteria defined for each respective node and are therefore within the update subset. Therefore, at step 835 those nodes within the update subset receive a ready signal broadcast from the server. Nodes not within the update subset do not receive the ready signal. Nodes that receive the ready signal remain in the wake state pending the update. The update may be sent by a local gateway or remote device and may include one or more images, including a firmware image, a bootloader image, and an application image. The rejection criteria can be evaluated based on the current energy level of the node determined in step 810, the current rate of power generation determined at step 815, the workload of the node determined at step 820, and/or the extraneous information evaluated at step 825. In one embodiment, the update is made available to all nodes of a type or group, and nodes that do not withstand their respective rejection criteria can decline the update and wait to download the update until they are in condition to download and install the update according to the rejection criteria. According to other embodiments, the rejection criteria is evaluated by a local gateway or remote device, and the update is only made available to the nodes that withstand the rejection criteria as discussed above.

According to some embodiments, step 835 includes downloading a partial update according to the rejection criteria of the node. For example, some nodes with a relatively limited power budget can elect to download an individual chunk of the update or a range of chunks of the update, and the remainder of the update can be downloaded at a later time.

According to some embodiments, to authenticate the identity and communications of the nodes, each type or group of nodes is assigned a key, and each individual node is assigned a unique ID stored in a database. The key and unique ID are verified by the gateway or remote device during a two-way handshake for each communication between devices to ensure that the communications received from the node are authentic. According to some embodiments, all data sent and received by the nodes, the gateways, and the remote devices are encrypted using a 256-bit encryption protocol.

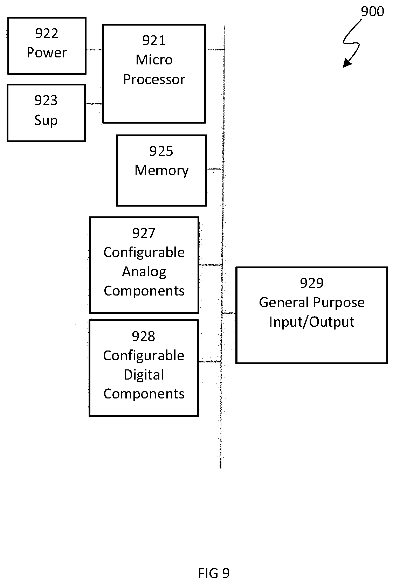

Figure 9 is a block diagram of an exemplary PSoC 900 in accordance with one embodiment. PSoC 900 includes microprocessor 921 communicatively coupled to power component 922, supervisor component 923, memory 925, configurable analog components 927, configurable digital component 928, and general purpose input/output component 929. The configurable components of PSoC 900 can be automatically wirelessly reprogrammed/reconfigured in the field.

With regard to Figure 10, an exemplary sequence of downloads 1000, 1005, 1010, 1015, and 1020 for downloading an update image to a device (e.g., a control node) is depicted according to embodiments of the present invention. For example, the update image may be a bootloader image, a firmware image, or an application image. The update image may be downloaded in chunks using a bootloader and transferred to a memory 1025 of a component (e.g., a management sub-system or a communication sub-system) to update the component using the update image.

Each portion or chunk of the image is assigned an ID. In the example of Figure 10, the update image is divided into 16 chunks numbered 0 through 15. In the first download step 1000 of the update download, chunks 0-5 are downloaded using a bootloader to memory (e.g., non-volatile memory of a PSoC) for storage. The first download step 1000 does not download the entire image due to power constraints of the device. At a later time, download step 1005 is performed to download chunks 7 and 8 when the device has generated additional power. Thereafter, download step 1010 is performed to download chunk 12, download step 1015 is performed to download chunk 9-11 and 13-15, and download step 1020 is performed to download the final chunk 6 based on the power available to the device. At this time, the entire image has been downloaded to memory. The update image and each chunk thereof can be verified using a checksum to detect any errors or corrupted information before the update image is transferred to memory 1025.

With regard to Figure 11, an exemplary block diagram and data flow diagram 1100 for updating a bootloader 1115 of a PSoC 1105 is depicted according to embodiments of the present invention. Update image 1125 is received by the PSoC 1105 over a wireless communication network. The update image 1125 is stored in memory 1110 to update the bootloader 1115, and the PSoC can boot to the updated bootloader 1115 and use the bootloader 115 to download one or more additional updates images, for example, to update application program 1120 executed by the PSoC 1105.

With regard to Figure 12, an exemplary block diagram and data flow diagram 1200 for updating the firmware of an xDoT radio using a bootloader 1215 of PSoC 1205 is depicted according to embodiments of the present invention. Update image 1225 is received by the PSoC 1205 over a wireless communication network. The update image 1225 is stored in memory 1210 of PSoC 1205 until the entire update image 1225 has been downloaded, and the update image 1225 is then transferred to memory 1235 of xDoT 1230 to update the firmware of xDoT 1230.

With regard to Figure 13, an exemplary block diagram and data flow diagram 1300 for updating an application program 1320 executed by a PSoC 1305 using a bootloader 1315 of PSoC 1305 is depicted according to embodiments of the present invention. Update image 1325 is received by the PSoC 1305 over a wireless communication network. The update image 1325 is stored in memory 1310 of PSoC 1305 until the entire update image 1325 has been downloaded, and the update image 1325 is then used by the bootloader 1315 to update the application program 1320 of PSoC 1305. The PSoC 1305 can then boot to the updated application program 1320.

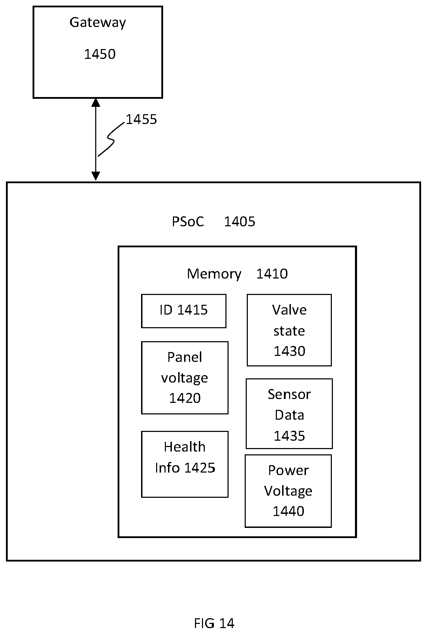

With regard to Figure 14, an exemplary PSoC 1405 of a device (e.g., a control node) in wireless communication with a local gateway or remote device 1450 is depicted according to embodiments of the present invention. The PSoC 1405 sends periodic status updates to gateway 1450 and receives information and update data from gateway 1450. Memory 1410 of PSoC 1405 stores a variety of information including a device ID 1415, the current voltage 1420 obtained from a self-harvesting power source (e.g., solar panel), device health and diagnostic information 1425, a state of one or more valves (e.g., irrigation/flow control valves) 1430 coupled to the device, data obtained from one or more sensors 1435 couple to the device, and a current power voltage of the device 1440 (e.g., energy stored in one or more supercapacitors of the device). The data stored in memory 1410 can be periodically transmitted to gateway 1450 or a remote device (e.g., a cloud computing server) over communication network 1455. Other information stored in the memory of the PSoC 1405 and periodically transmitted to gateway 1450 includes a work schedule of the device, and information regarding the soil where the device is installed, such as soil type (composition) and soil moisture/wetness levels.

With regard to Figure 15A, an exemplary wireless control and communication system 1500 for managing and operating a plurality of nodes 1510, 1515, 1520, 1525, and 1530 (e.g., control devices) is depicted according to embodiments of the present invention. The nodes 1510, 1515, 1520, 1525, and 1530 enter a sleep state according to a sleep schedule (e.g., duty cycle) and wake periodically (e.g., once every 15 minutes) to send and receive data. For example, the nodes 1510, 1515, 1520, 1525, and 1530 communicate wirelessly with gateway 1505 over a long range wireless protocol (e.g., LoRa) to obtain a periodic status report 1535. The periodic status report 1535 can include a variety of information stored in a node. For example, the periodic status report 1535 can include an ID associated with the node, a current energy level stored by the node, a status of one or more valves coupled to the node, data obtained from one or more sensors coupled to the node, the charging status or health of the node, and firmware versions currently executed by the node.

Moreover, the gateway 1505 can send a ready signal 1540 to a node or a group of nodes indicating that an update (e.g., a firmware and/or application image) is available to the nodes. According to some embodiments, the nodes can accept the download according to rejection criteria defined for the node. Accepting the download can include downloading all of the update image or a portion of the update image, and the update is installed when the entire update image has been downloaded.

With regard to Figure 15B, an exemplary sleep schedule for a node (e.g., a control device) is depicted according to embodiments of the present invention. The duty cycle 1555 a wake time defines the amount of time that the node will be awake during a period. For example, according to some embodiments, nodes will wake up once every 15 minutes to send and receive data with a local gateway or remote device. When the node is awake it can send status updates to the local gateway or remote device, read data from one or more sensors coupled to the node, control or activate one or more devices (e.g., flow valves) coupled to the node, and can download and install updates from the local gateway or remote device to update components of the node, among other possible operations.

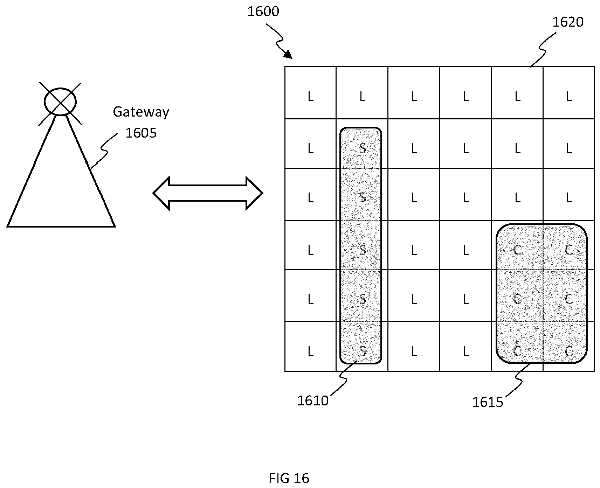

With regard to Figure 16, an exemplary chart 1600 of soil compositions of a field where control devices, sensors, and irrigation equipment are installed is depicted according to embodiments of the present invention. The field depicted in chart 1600 includes a variety of different soil compositions that may impact a node's schedule of operations. According to some embodiments, based on the soil type underlying various plants where the control devices operate, different watering schedules can be defined to accommodate the respective soil type when providing water to crops. For example, clay-heavy soil ("C") 1615 require less water because more water is retained by the clay. Soil types that contain large amounts of sand or sediment ("S") 1615 typically require more water because the water drains rapidly through the soil and is not readily absorbed by the surrounding crops. Soil types that do not contain a large amount of clay or sand and sediment (normal soil or loam) ("L") 1620 can be supplied a typical amount of water based on the needs of the crop. Each grid in the chart can contain a number of individual control devices in communication with local gateway 1605, and the type of soil can be considered when determining a future workload of a control device for evaluating rejection criteria (e.g., due to insufficient energy reserved to complete the expected work schedule of the device) according to embodiments of the present invention.

Embodiments of the present invention include the following Concepts:
Concept 1. A method of programming remote electronic devices, said method including: a server system checking reported levels of energy stores of a plurality of control devices; the server system determining expected future workloads of said plurality of control devices; based on said reported levels of energy stores and said expected future workloads, the server system determining a subset of said plurality of control devices that are suitable for a programming cycle; the server system transmitting ready signals to said subset of control devices via a wireless network to prepare said subset of control devices for the programming cycle and wherein control devices of said subset remain in power up state awaiting programming subsequent to receiving said ready signals; and the server system performing said programming cycle by transmitting programming information over said wireless network to said subset of control devices for programming thereof until all control devices of said subset of control devices report successful programming thereof, and wherein said plurality of control devices include remotely installed in-field electronic devices that include respective components and electronics to perform power self harvesting, wherein no external power source or supply is required for performance of operations of said plurality of control devices.
Concept 2. The method as described in Concept 1 wherein each control device of said plurality of control devices periodically reports update information to said server system over said wireless network during a respective update period and also listens for communication from said server system during said respective update period, wherein said update information includes: an indication of a level of energy store for a respective control device; an identification code of the respective control device; and an indication of sensor data and valve state data associated with the respective control device.
Concept 3. The method as described in Concept 2 wherein each control device of said subset of control devices also receives said ready to program signal during said respective update cycle.
Concept 4. The method as described in Concept 1 wherein said expected future workloads of said plurality of control devices include, for each control device, scheduled valve control operations and scheduled sensor reading operations expected to be performed by each control device before a next expected power recharge event for power self harvesting operations of each control device.
Concept 4A. The method as described in Concept 1 wherein said reported levels of energy stores of said plurality of control devices include reported voltage levels of supercapacitors of the plurality of control devices.
Concept 5. The method as described in Concept 1 further including, during said programming cycle, each control device of said subset of control devices performing programming of a plurality of integrated circuit devices associated therewith based on downloaded programming information from said server system.
Concept 6. The method as described in Concept 5 wherein said plurality of integrated circuit devices, for each control device, include: a PSoC controller; and a wireless communication radio device coupled to said PSoC controller.
Concept 7. The method as described in Concept 6 wherein said performing programming of said plurality of integrated circuit devices for a respective control device includes programming a wireless communication radio device of said respective control device by: downloading a bootloader image into a PSoC controller associated with said respective control device; executing the bootloader in the PSoC controller; using the bootloader to download a first image into non-volatile memory of the PSoC controller; programming a wireless communication radio device of said respective control device using the PSoC controller and the first image; using the bootloader to download a PSoC application to the non-volatile memory of the PSoC controller; and executing the PSoC application on said PSoC controller.
Concept 8. The method as described in Concept 7 wherein said first image and said PSoC application are downloaded from said server system to said respective control device in a plurality of discrete chucks and wherein each chuck is verified by checksum.
Concept 8A. The method as described in Concept 1 wherein the wireless network is a wireless network based on the LoRa wireless communication standard.
Concept 8B. The method as described in Concept 6 wherein said performing programming of said plurality of integrated circuit devices for a respective control device includes programming a PSoC controller of said respective control device by: downloading a bootloader image into the PSoC controller; executing the bootloader in the PSoC controller; using the bootloader to download a PSoC application into memory of the PSoC controller; and executing the PSoC application.
Concept 9. The method as described in Concept 1 wherein the server system determining a subset of said control devices that are suitable for a programming cycle includes: the server system utilizing the expected future workloads to compute power consumption levels for said plurality of control devices; the server system subtracting the power consumption levels from the levels of energy stores to obtain residual energy levels for said plurality of control devices; and the server system examining said residual energy levels of said plurality of control devices to determine which control devices have sufficient residual energy levels to allow for programming thereof and including only those control devices into said subset.
Concept 10. The method as described in Concept 1 wherein each control device of said plurality of control devices include: an enclosure defining an interior space and including a first opening; a second opening and a third opening, wherein the enclosure is sealed to restrict water entry to the interior space; a power harvesting device sealed with respect to the first opening to restrict water entry to the interior space, the power harvesting device operable to generate and provide power; a plurality of super capacitors disposed within the interior space and operable to receive and store power generated from the power harvesting device; control electronics disposed within the interior space and including a processor and re-programmable memory, the control electronics coupled to receive power from the plurality of super capacitors and operable for capturing sensor data, operable for generating valve control information and further operable to communicate with a remote control station; a wireless communication device disposed within the interior space and coupled to the control electronics and operable to provide wireless communication for the control electronics; and input/output circuitry operable for generating signals responsive to the control electronics to control exterior valves and further operable for receiving sensor data from exterior sensors, wherein the input/output circuitry is disposed within the interior space and coupled to ports disposed at the second and third openings.
Concept 11. A wirelessly reprogrammable irrigation control system, said irrigation control system including: a plurality of control devices; a server configured to determine levels of energy stores and expected future workloads of the plurality of control devices; and a local gateway configured to facilitate communication between said server and the plurality of control devices wherein said local gateway communicates wirelessly with the plurality of control devices via a radio network; and wherein the server is further operable to: determine a subset of said plurality of control devices that are suitable for a programming cycle based on said levels of energy stores and said expected future workloads; transmit ready signals to said subset of control devices via the local gateway to prepare said subset of control devices for the programming cycle; and perform said programming cycle by transmitting programming information to said subset of control devices via said local gateway for programming thereof until all control devices of said subset of control devices report successful programming thereof.
Concept 12. The control system described in Concept 15 wherein said plurality of control devices include remotely installed in-field electronic devices that include respective components and electronics to perform power self harvesting, wherein no external power source or supply is required for performance of operations of said plurality of control devices.
Concept 12A. The control system described in Concept 15 wherein control devices of said subset remain in power up state awaiting programming subsequent to receiving said ready signals.
Concept 12B. The control system described in Concept 15 wherein the server determines a subset of said plurality of control devices that are suitable for a programming cycle based on rejection criteria associated with the plurality of control devices, and wherein the rejection criteria for a respective control device includes at least one of: a current time of day, a soil type associated with the respective control device, historical power generation information associated with the respective control device, and expected weather conditions.
Concept 12C. The control system described in Concept 15 wherein said server includes a cloud computing device and wherein further said local gateway executes a Linux operating system and can perform functionality of the server in case the server is unavailable and wherein further the local gateway is configured to communicate with the server via a cellular communication network.
Concept 12D. A method of wirelessly reprogramming a control device, said method including: using a server, determining that a control device is in condition to download and install the update according to a stored energy level of the control device and rejection criteria associated with the control device; using the server to broadcast data indicating that an update is available for the control device; provided the control device is in condition to download and install the update, performing the following: using said server, wirelessly transmitting a first update image of said update to said control device; updating a bootloader of said control device using said first update image; using said control device to execute said bootloader;downloading a second update image to said control device; and using said bootloader executed by said control device to update a sub-system of said control device with the second update image.
Concept 13. The method described in one of Concepts 12-12D wherein said sub-system includes a PSoC management sub-system and wherein said second update image includes an application program image for programming said PSoC management sub-system.
Concept 14. The method described in one of Concepts 12-12D wherein said sub-system includes an xDoT communication sub-system and wherein said second update image includes a firmware image for programming said xDoT communication sub-system and wherein further said using said bootloader executed by said control device to update a sub-system of said control device with the second update image includes said boot loader copying said second image into said xDoT communication sub-system.
Concept 15. The method described in Concept 14 further including: downloading a third update image to said bootloader; and using said bootloader executed by said control device to update a PSoC management sub-system of said control device.
Concept 15A. The method described in one of Concepts 12-12D wherein said control device includes a remotely installed in-field electronic device that includes respective components and electronics to perform power self harvesting, wherein no external power source or supply is required for performance of operations of said control device.
Concept 15B. The method described in one of Concepts 12-12D wherein control device remains in a power up state awaiting programming subsequent to said determining that said control device is in condition to download and install the update according to a stored energy level of the control device and rejection criteria associated with the control device.
Concept 15C. The method described in one of Concepts 12-12D wherein said rejection criteria includes at least one of: a time of day, an expected future workload of the control device, a soil type, historical power generation information, and a weather condition.
Concept 27. A method of wirelessly updating firmware of a control device, said method including: determining if said control device is suitable to participate in an update cycle and therefore has sufficient energy to participate; provided said control device is suitable to participate in said update cycle, transmitting a ready signal to said control device via a wireless network; responsive to said ready signal, said control device remaining in a wake state; transmitting a new program wirelessly to said control device using said wireless network; and said control device updating internal memory with said new program and executing said new program, wherein said control device is a remotely installed self-contained electronic device operating at low power.
Concept 28. A method as described in Concept 27 wherein said determining if said control device is suitable to participate in an update cycle includes: checking previously reported and stored data from said control device indicating an energy store of said control device and a schedule of work that said control device is expected to perform.
Concept 29. A method as described in Concept 27 wherein said determining if said control device is suitable to participate in an update cycle further includes checking at least one of: measured and reported soil conditions of said control device; known soil types of said control device; weather conditions; and a charging rate of a power harvesting component associated with said control device.
Concept 30. A method as described in Concept 27 wherein said control device includes: a wireless communication system at a first power domain; a processor system including a memory at said first power domain; an input/output system at a second power domain and for controlling external actuators and for reading data from external sensors, wherein said first power domain is a low power domain; and a power harvesting component coupled to store harvested power to a power store wherein said power store supplies power for said first and second power domains.
Concept 31. A method as described in Concept 30 wherein said power harvesting component is a solar panel, wherein said power store is a super capacitor, wherein said external actuators are configured to turn on/off irrigation valves and wherein said first power domain is substantially at 0.7 - 3.0 volts.
Concept 32. A method as described in Concept 27 wherein said wireless network is compatible with the LoRa wireless network standard.
Concept 33. A method as described in Concept 27 further including a remote server system and wherein said control device includes: a processor system including a processor and memory; and a communication system, and wherein said transmitting, said updating and said executing include: said server system wirelessly transmitting a bootloader to said memory of said control device; said control device using said bootloader to download an application program from said server for storage into said memory of said control device; and said processor of said control device executing said application program from said memory.
Concept 34. A method as described in Concept 27 further including a remote server system and wherein said control device includes: a processor system including a processor and memory; and a communication system, and wherein said transmitting, said updating and said executing include: said server system wirelessly transmitting a bootloader to said memory of said control device; said control device using said bootloader to download a program image from said server for storage into said memory of said control device; said bootloader copying said program image from said memory to said communication system; said communication system executing a program of said program image; said control device using said bootloader to download an application program from said server for storage into said memory of said control device; and said processor of said control device executing said application program from said memory.

Some embodiments may be described in the general context of computer-executable instructions, such as program modules, executed by one or more computers or other devices. Generally, program modules include routines, programs, objects, components, data structures, etc. that perform particular tasks or implement particular abstract data types. Typically the functionality of the program modules may be combined or distributed as desired in various embodiments.

Embodiments of the present invention are thus described. While the present invention has been described in particular embodiments, it should be appreciated that the present invention should not be construed as limited by such embodiments, but rather construed according to the following claims.

## Claims

1. A method of programming remote electronic devices, said method comprising:
a server system checking reported levels of energy stores of a plurality of control devices;
the server system determining expected future workloads of said plurality of control devices;
based on said reported levels of energy stores and said expected future workloads, the server system determining a subset of said plurality of control devices that are suitable for a programming cycle;
the server system transmitting ready signals to said subset of control devices via a wireless network to prepare said subset of control devices for the programming cycle and wherein control devices of said subset remain in power up state awaiting programming subsequent to receiving said ready signals; and
the server system performing said programming cycle by transmitting programming information over said wireless network to said subset of control devices for programming thereof until all control devices of said subset of control devices report successful programming thereof, and
wherein said plurality of control devices comprise remotely installed in-field electronic devices that comprise respective components and electronics to perform power self harvesting, wherein no external power source or supply is required for performance of operations of said plurality of control devices.

2. The method as described in Claim 1 wherein each control device of said plurality of control devices periodically reports update information to said server system over said wireless network during a respective update period and also listens for communication from said server system during said respective update period, wherein said update information comprises: an indication of a level of energy store for a respective control device; an identification code of the respective control device; and an indication of sensor data and valve state data associated with the respective control device.

3. The method as described in Claim 2 wherein each control device of said subset of control devices also receives said ready to program signal during said respective update cycle.

4. The method as described in Claim 1 wherein said expected future workloads of said plurality of control devices comprise, for each control device, scheduled valve control operations and scheduled sensor reading operations expected to be performed by each control device before a next expected power recharge event for power self harvesting operations of each control device.

5. The method as described in Claim 1 further comprising, during said programming cycle, each control device of said subset of control devices performing programming of a plurality of integrated circuit devices associated therewith based on downloaded programming information from said server system.

6. The method as described in Claim 5 wherein said plurality of integrated circuit devices, for each control device, comprise: a PSoC controller; and a wireless communication radio device coupled to said PSoC controller.

7. The method as described in Claim 6 wherein said performing programming of said plurality of integrated circuit devices for a respective control device comprises programming a wireless communication radio device of said respective control device by:
downloading a bootloader image into a PSoC controller associated with said respective control device;
executing the bootloader in the PSoC controller;
using the bootloader to download a first image into non-volatile memory of the PSoC controller;
programming a wireless communication radio device of said respective control device using the PSoC controller and the first image;
using the bootloader to download a PSoC application to the non-volatile memory of the PSoC controller; and
executing the PSoC application on said PSoC controller.

8. The method as described in Claim 6 wherein said performing programming of said plurality of integrated circuit devices for a respective control device comprises programming a PSoC controller of said respective control device by:
downloading a bootloader image into the PSoC controller;
executing the bootloader in the PSoC controller;
using the bootloader to download a PSoC application into memory of the PSoC controller; and
executing the PSoC application.

9. The method as described in Claim 1 wherein the server system determining a subset of said control devices that are suitable for a programming cycle comprises:
the server system utilizing the expected future workloads to compute power consumption levels for said plurality of control devices;
the server system subtracting the power consumption levels from the levels of energy stores to obtain residual energy levels for said plurality of control devices; and
the server system examining said residual energy levels of said plurality of control devices to determine which control devices have sufficient residual energy levels to allow for programming thereof and including only those control devices into said subset.

10. The method as described in Claim 1 wherein each control device of said plurality of control devices comprise:
an enclosure defining an interior space and comprising a first opening; a second opening and a third opening, wherein the enclosure is sealed to restrict water entry to the interior space;
a power harvesting device sealed with respect to the first opening to restrict water entry to the interior space, the power harvesting device operable to generate and provide power;
a plurality of super capacitors disposed within the interior space and operable to receive and store power generated from the power harvesting device;
control electronics disposed within the interior space and comprising a processor and re-programmable memory, the control electronics coupled to receive power from the plurality of super capacitors and operable for capturing sensor data, operable for generating valve control information and further operable to communicate with a remote control station;
a wireless communication device disposed within the interior space and coupled to the control electronics and operable to provide wireless communication for the control electronics; and
input/output circuitry operable for generating signals responsive to the control electronics to control exterior valves and further operable for receiving sensor data from exterior sensors, wherein the input/output circuitry is disposed within the interior space and coupled to ports disposed at the second and third openings.

11. A wirelessly reprogrammable irrigation control system, said irrigation control system comprising:
a plurality of control devices;
a server configured to determine levels of energy stores and expected future workloads of the plurality of control devices; and
a local gateway configured to facilitate communication between said server and the plurality of control devices wherein said local gateway communicates wirelessly with the plurality of control devices via a radio network; and
wherein the server is further operable to:
determine a subset of said plurality of control devices that are suitable for a programming cycle based on said levels of energy stores and said expected future workloads;
transmit ready signals to said subset of control devices via the local gateway to prepare said subset of control devices for the programming cycle; and
perform said programming cycle by transmitting programming information to said subset of control devices via said local gateway for programming thereof until all control devices of said subset of control devices report successful programming thereof.

12. A method of wirelessly reprogramming a control device, said method comprising:
using a server, determining that a control device is in condition to download and install the update according to a stored energy level of the control device and rejection criteria associated with the control device;
using the server to broadcast data indicating that an update is available for the control device;
provided the control device is in condition to download and install the update, performing the following:
using said server, wirelessly transmitting a first update image of said update to said control device;
updating a bootloader of said control device using said first update image;
using said control device to execute said bootloader;
downloading a second update image to said control device; and
using said bootloader executed by said control device to update a sub-system of said control device with the second update image.

13. The method described in Claim 12 wherein said sub-system comprises a PSoC management sub-system and wherein said second update image comprises an application program image for programming said PSoC management sub-system.

14. The method described in Claim 12 wherein said sub-system comprises an xDoT communication sub-system and wherein said second update image comprises a firmware image for programming said xDoT communication sub-system and wherein further said using said bootloader executed by said control device to update a sub-system of said control device with the second update image comprises said boot loader copying said second image into said xDoT communication sub-system.

15. The method described in Claim 14 further comprising:
downloading a third update image to said bootloader; and
using said bootloader executed by said control device to update a PSoC management sub-system of said control device.
